(19) **Europäisches Patentamt**
European Patent Office
Office européen des brevets

(11) **EP 1 132 680 B1**

(12) **EUROPÄISCHE PATENTSCHRIFT**

(45) Veröffentlichungstag und Bekanntmachung des Hinweises auf die Patenterteilung:
**03.09.2008 Patentblatt 2008/36**

(51) Int Cl.:
**F21V 8/00** (2006.01)

(21) Anmeldenummer: **01105866.6**

(22) Anmeldetag: **09.03.2001**

(54) **Leuchte mit inhomogener Lichtabstrahlung**

Luminaire with non homogeneus light radiation

Luminaire avec rayonnement non homogène de lumière

(84) Benannte Vertragsstaaten:
**AT BE CH CY DE DK ES FI FR GB GR IE IT LI LU MC NL PT SE TR**
Benannte Erstreckungsstaaten:
**SI**

(30) Priorität: **09.03.2000 DE 10011304**

(43) Veröffentlichungstag der Anmeldung:
**12.09.2001 Patentblatt 2001/37**

(73) Patentinhaber: **Siteco Beleuchtungstechnik GmbH**
**83301 Traunreut (DE)**

(72) Erfinder: **Prodell, Peter**
**83308 Trostberg (DE)**

(74) Vertreter: **Schohe, Stefan et al**
**Forrester & Boehmert**
**Pettenkoferstrasse 20-22**
**80336 München (DE)**

(56) Entgegenhaltungen:
| | |
|---|---|
| **EP-A- 0 638 764** | **EP-A- 0 846 915** |
| **EP-A- 0 978 683** | **EP-A- 1 033 530** |
| **EP-A- 1 156 268** | **US-A- 5 863 114** |

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die Erfindung betrifft eine Leuchte mit inhomogener Lichtabstrahlung, d.h. eine Leuchte, bei welcher in verschiedenen Bereichen die Lichtabstrahlcharakteristik unterschiedlich ist. Derartige Leuchten wurden bislang dadurch realisiert, daß entweder die Lichttechnik von zwei verschiedenen Leuchten in ein Gehäuse integriert wurde, also letztendlich in einem Gehäuse zwei Leuchten mit jeweils einer eigenen Lampe, einem eigenen Reflektor und dergleichen integriert wurden. Es ist auch vorgeschlagen worden, das Licht einer Lampe durch geeignete Gestaltung der Reflektoren in einen direkten und einen indirekten Lichtanteil aufzuspalten. Weiterhin ist es, beispielsweise aus der EP-0 638 764 B1, bekannt, einen Teil des Lichts einer Lampe, welche über eine erste Lichtaustrittsfläche Licht abgibt, zu einer zweiten Lichtaustrittsfläche zu leiten.

Die letztgenannten Vorschläge haben sich in der Praxis zwar bewährt. Nachteilig ist jedoch, daß die Aufspaltung des Lichts von der Lampe und das Leiten zu jeweiligen verschiedenen Lichtaustrittsflächen mit den herkömmlichen Techniken aufwendig war, insbesondere dann, wenn an den verschiedenen Lichtaustrittsflächen jeweils eine Abschirmung des austretenden Lichts erzeugt werden sollte.

EP 1 033 530 A2, welche nach dem Prioritätstag veröffentlicht wurde, offenbart eine Leuchte, bei welcher rechts und links von einer Lampe jeweils eine Kammer vorgesehen ist, die Licht an einer zugehörigen Lichtaustrittsfläche abstrahlt. Eine Lichtaustrittsfläche mit Bereichen mit unterschiedlichen Lichtabstrahleigenschaften ist in dieser Druckschrift nicht offenbart.

Auf dem Gebiet der Anzeigevorrichtungen ist aus EP 0 978 683 A1 eine optische Anzeigevorrichtung bekannt, bei welcher auf zwei einander gegenüberliegenden Seiten verschiedene Informationen angezeigt werden. Die Anzeige dieser Informationen wird dadurch bewirkt, daß an oder in einem Lichtleiter in dem Bereich, in dem eine Information, beispielsweise ein Symbol, angezeigt werden soll, Licht durch eine Prismenstruktur ausgekoppelt wird. Aus US-PS 5 863 114 ist eine Hintergrundbeleuchtung für Anzeigevorrichtungen bekannt, bei welcher in einer Prismenstruktur, mit welcher Licht aus einem Hohllichtleiter ausgekoppelt wird, lokale Inhomogenitäten vorgesehen sind, welche bewirken, daß in lampenfernen Bereichen die Lichtauskopplung verstärkt wird und in den lampennahen Bereichen die Lichtauskopplung verringert wird, so daß im Ergebnis die Lichtaustrittsfläche gleichförmig hell erscheint.

Der Erfindung liegt die Aufgabe zugrunde, einen neuen Leuchtentyp zur Verfügung zu stellen, bei dem sich unterschiedliche Abstrahleigenschaften in verschiedenen Bereichen einfacher als bisher realisieren lassen.

Erfindungsgemäß wird diese Aufgabe gelöst durch eine Leuchte nach Anspruche 1 oder 2.

Die Erfindung kann vorsehen, daß der Hohllichtleiter mehrere unterschiedlich ausgebildete Bereiche aufweist, in denen er unterschiedliche Lichtauskoppeleigenschaften besitzt.

Die Erfindung kann vorsehen, daß der Hohllichtleiter mehrere unterschiedlich ausgebildete Bereiche aufweist, in denen das über eine Lichtauskoppeleinrichtung ausgekoppelte Licht unterschiedliche Eigenschaften besitzt.

Es kann vorgesehen sein, daß das über eine Lichtaustrittsfläche der Leuchte in einem ersten Bereich abgestrahlte Licht eine symmetrische Lichtstärkeverteilungskurve aufweist und in einem zweiten Bereich eine asymmetrische Lichtstärkeverteilungskurve.

Es kann vorgesehen sein, daß eine Lichtauskoppeleinrichtung mehrere Bereiche mit verschiedenen lichtbrechenden Strukturen, insbesondere Strukturen mit einem unterschiedlichen Lichtbrechungsverhalten, z.B. Prismenstrukturen mit einem unterschiedlichen Prismenwinkel (bei gleichem Brechungsindex), zur Lichtauskopplung aufweist.

Insbesondere kann in einem ersten Bereich eine Struktur vorgesehen sein, welche eine abgeschirmte Lichtstärkeverteilungskurve erzeugt, und in einem zweiten Bereich eine Struktur, welche eine breitstrahlende, im wesentlichen nicht abgeschirmte Lichtstärkeverteilungskurve erzeugt, welche asymmetrisch sein oder bei kleinen Winkeln ein Minimum aufweisen kann (Batwing-Verteilung)

Es kann auch vorgesehen sein, daß die Lichtauskoppeleinrichtung zwei in Richtung einer Lampenachse versetzte Bereiche mit einer unterschiedlichen lichtbrechenden Struktur aufweist.

Es kann auch vorgesehen sein, daß ein erster Bereich mit einer ersten lichtbrechenden Struktur einen zweiten Bereich mit einer zweiten lichtbrechenden Struktur auf mehreren Seiten umgibt.

Beispielsweise kann der erste Bereich auf zwei oder drei Seiten an den zweiten Bereich angrenzen oder diesen auch vollständig umschließen.

Die Erfindung kann vorsehen, daß in einem ersten Bereich eine Struktur mit Prismen oder prismenähnlichen Elementen mit einem Prismenwinkel von mehr als 90°, insbesondere 90° bis 130°, vorzugsweise 110° bis 128° und in einem zweiten Bereich eine Struktur mit Prismen oder prismenähnlichen Elementen mit einem Prismenwinkel von 55° bis 80°, vorzugsweise 60° bis 75°, jeweils bei einem Brechungsindex von 1,49, oder, für einen anderen Brechungsindex, mit Prismenwinkeln, die zu dem gleichen Brechungsverhalten führen, vorgesehen sind.

Die Erfindung kann auch vorsehen, daß eine einer Lichtauskoppeleinrichtung gegenüberstehende reflektierende Wand, insbesondere ein Dachreflektor, in verschiedenen in Richtung einer Lampenachse versetzten Bereichen unterschiedlich ausgebildet ist.

Es kann vorgesehen sein, daß eine einer Lichtauskoppeleinrichtung gegenüberstehende reflektierende Wand zwei in Richtung der Lampenachse versetzte Bereiche aufweist, in denen die Wand, bezogen auf eine Ebene senkrecht zu der Lampenachse, unterschiedlich gekrümmt oder zu der Lichtauskoppeleinrichtung geneigt ist.

Es kann auch vorgesehen sein, daß eine einer Lichtauskoppeleinrichtung gegenüberstehende reflektierende Wand in einem ersten Bereich so zu einer Lampe ausgerichtet ist, daß das von der Lampe auf sie einfallende Licht im wesentlichen auf ihre dem Hohlraum zugewandte Seite einfällt und in den Hohlraum reflektiert wird und in einem zweiten Bereich das auf sie einfallende Licht derselben Lampe zumindest teilweise, insbesondere aber auch vollständig, auf die von dem Hohlraum abgewandte Seite einfällt und von dem Hohlraum weg zur Abgabe eines indirekten Lichtanteils reflektiert wird.

Die Erfindung sieht vor, daß eine Lampe zumindest bereichsweise Licht in den Hohlraum über eine Seite zwischen einer einer Lichtauskoppeleinrichtung gegenüberstehende reflektierende Wand und der Lichtauskoppeleinrichtung einkoppelt und der Abstand der reflektierenden Wand von der Fläche, in der die Lichtauskoppeleinrichtung liegt, in einem ersten Bereich des Hohllichtleiters im Bereich der Lichteinkopplung größer ist als in einem zweiten, in Richtung der Lampenachse versetzten Bereich.

Der besagte Abstand kann in dem zweiten Bereich verschwinden oder auf Null zurückgehen, so daß Licht von der Lampe ganz oder teilweise an dem Hohllichtleiter vorbei abgestrahlt wird und als indirekter Lichtanteil der Leuchte verwendet werden kann.

Die Erfindung kann vorsehen, daß eine Lampe nur in einem Teil der besagten versetzten Bereiche, insbesondere nur in einem solchen Bereich, Licht auf die besagte reflektierende Wand einstrahlt.

Die Erfindung kann vorsehen, daß eine Lichtaustrittsfläche einen ersten Bereich mit einer ersten mittleren Leuchtdichte und einem zweiten, an den ersten Bereich angrenzenden Bereich mit einer zweiten mittleren Leuchtdichte aufweist, die geringer als die erste Leuchtdichte ist. Auf diese Weise kann ein weicher Übergang der Leuchtdichte zur Umgebung hergestellt werden.

Die Erfindung kann vorsehen, daß in dem Hohlraum und/oder an oder in einer Lichtauskoppeleinrichtung eine Einrichtung zum Reduzieren der Lichtstärke des über die Lichtauskoppeleinrichtung ausgekoppelten Lichts in einem Teilbereich der Lichtauskoppeleinrichtung vorgesehen ist.

Die Erfindung kann vorsehen, daß die Lichtauskoppeleinrichtung eine flächiges lichtdurchlässiges Element, insbesondere eine Folie oder Platte, aufweist und ein Teil dieses Elements mit einer teilweise lichtdurchlässigen Beschichtung versehen ist, die vorzugsweise in die Richtung des Hohlraums teilweise reflektierend ausgebildet ist.

Die Erfindung kann vorsehen, daß in der Lichtauskoppeleinrichtung in einem Teilbereich ein die Lichtstärke reduzierendes Element, beispielsweise eine Folie oder Platte, einem Element mit einer lichtbrechenden Struktur vor- oder nachgeschaltet ist. Dieses zusätzliche Element muß nicht notwendig eine lichtbrechende Struktur aufweisen und ist vorzugsweise der besagten lichtbrechenden Struktur vorgeschaltet.

Die Erfindung kann vorsehen, daß von der Lichtauskoppeleinrichtung beabstandet im Inneren des Hohlraums ein teilweise lichtdurchlässiges Element angeordnet ist, welches die Lichtstärke des auf einen Teilbereich der Lichauskoppeleinrichtung einfallenden Lichts reduziert.

Dieses Element kann insbesondere eine teilweise lichtdurchlässige und teilweise reflektierende Platte oder Folie sein, welche zu der Lichtauskoppeleinrichtung beabstandet zwischen der Lichtauskoppeleinrichtung und einer der Lichtauskoppeleinrichtung gegenüberliegenden Wand angeordnet ist und sich über einen Teilbereich des Hohlraums erstreckt.

Es kann auch vorgesehen sein, daß von der Lichtauskoppeleinrichtung beabstandet im Inneren des Hohlraums des Hohllichtleiters ein Element angeordnet ist, welches zwischen der Lichtauskoppeleinrichtung und einer der Lichtauskoppeleinrichtung gegenüberliegenden Wand angeordnet ist und sich über einen Teilbereich des Hohlraums erstreckt, und auf der der Lichtauskoppeleinrichtung zugewandten Seite und auf der dieser Seite gegenüberliegenden Seite reflektierend ausgebildet ist.

Dabei besitzt der Teilbereich des Hohlraums zwischen diesem Element und der Lichtauskoppeleinrichtung zumindest eine offene Seite, über die Licht aus dem restlichen Hohlraum in diesen Teilbereich eintreten kann. Die durch das Element erzeugte geometrische Begrenzung des Lichteinfalls führt zu einer Verringerung der Leuchtdichte in einem Teilbereich der Lichtaustrittsfläche. Durch die beidseitig reflektierende Ausbildung kann das in den Hohlraum von den Lampen eingestrahlte Licht weitgehend vollständig genutzt werden.

Es kann auch vorgesehen sein, daß die Lichtstärkeverteilungskurve in dem Bereich mit verringerter Leuchtdichte einen größeren Winkelbereich abdeckt als in dem Bereich mit größerer Leuchtdichte.

Erfindungsgemäß kann auch vorgesehen sein, daß der Lichtauskoppeleinrichtung eine Einrichtung nachgeschaltet ist, welche die Leuchtdichte auf einem Teil der Lichtaustrittsfläche reduziert, beispielsweise eine teilweise absorbierende Folie oder dergleichen.

Es kann auch vorgesehen sein, daß eine Lichtaustrittsfläche einen ersten Bereich und einem zweiten, an den ersten Bereich angrenzenden Bereich aufweist, in dem das austretende Licht eine andere Farbe als in dem ersten Bereich aufweist.

Es kann auch vorgesehen sein, daß in dem Hohlraum und/oder an oder in der Lichtauskoppeleinrichtung eine farbgebende Einrichtung zum Erzeugen einer bestimmten Farbe des aus der Lichtauskoppeleinrichtung austretenden Lichts in einem Teilbereich der Lichtauskoppeleinrichtung vorgesehen ist.

Es kann auch vorgesehen sein, daß die Lichtauskoppeleinrichtung ein flächiges lichtdurchlässiges Element, insbesondere eine Folie oder Platte, aufweist, das ganz oder teilweise farbgebend ist, z.B. durch eine farbgebenden Beschichtung oder Strukturierung, derart, daß der farbgebende Bereich dieses Elements einen Teilbereich der Lichtauskoppeleinrichtung bildet.

Es kann auch vorgesehen sein, daß von der Lichtauskoppeleinrichtung beabstandet im Inneren des Hohlraums ein farbgebendes Element angeordnet ist, welches die Farbe des auf einen Teilbereich der Lichauskoppeleinrichtung einfallenden Lichts verändert.

Dieses Element kann insbesondere eine farbselektive Platte oder Folie sein, welche zu der Lichtauskoppeleinrichtung beabstandet zwischen der Lichtauskoppeleinrichtung und einer der Lichtauskoppeleinrichtung gegenüberliegenden Wand angeordnet ist und sich über einen Teilbereich des Hohlraums erstreckt.

Es kann auch vorgesehen sein, daß von der Lichtauskoppeleinrichtung beabstandet im Inneren des Hohlraums ein beidseitig reflektierendes Element angeordnet ist, welches zwischen der Lichtauskoppeleinrichtung und einer der Lichtauskoppeleinrichtung gegenüberliegenden Wand angeordnet ist und sich über einen Teilbereich des Hohlraums erstreckt, wobei die der Lichtauskoppeleinrichtung zugewandte Seite dieses Elements farbgebend ausgebildet ist, z.B. entsprechend beschichtet oder strukturiert ist.

Es kann auch vorgesehen sein, daß der Lichtauskoppeleinrichtung oder einem Element der Lichtauskoppeleinrichtung eine farbselektive Einrichtung nachgeschaltet ist, welche die Farbe des austretenden Lichts auf einem Teil der Lichtaustrittsfläche verändert.

Es kann auch vorgesehen sein, daß die Leuchtdichte in einem Bereich der Lichtausktrittsfläche in einem Bereich, in dem farbiges Licht austritt, geringer ist als in einem Bereich, in dem weißes Licht austritt.

Es kann auch vorgesehen sein, daß die Lichtauskoppeleinrichtung einen Teilbereich ohne eine das hindurchtretende Licht gerichtet ablenkende lichtbrechende Struktur, wie etwa eine Prismenstruktur wie vorangehend beschrieben, aufweist.

Es kann auch vorgesehen sein, daß die Lichtauskoppeleinrichtung in einem Teilbereich, in dem ein die Leuchtdichte begrenzendes und/oder ein farbgebendes Element wirksam ist, insbesondere in einem Teilbereich, in dem ein solches Element angeordnet ist, keine das hindurchtretende Licht gerichtet ablenkende lichtbrechende Struktur aufweist.

Die Erfindung kann auch vorsehen, daß die Leuchte mehrere in der Richtung der Achse einer Lampe versetzte Bereiche mit unterschiedlichen Lichtabstrahleigenschaften aufweist und die besagte Lampe nur in einem Teil dieser Bereiche zu der Lichtabstrahlung beiträgt.

Insbesondere kann vorgesehen sein, daß sich die Lampe nur über einen Teil dieser Bereiche erstreckt.

Die Erfindung kann vorsehen, daß die Lichtauskoppeleinrichtung mindestens ein lichtdurchlässiges Element mit einer Grenzfläche zwischen zwei Medien mit einem unterschiedlichen Brechungsindex aufweist, die mit einer lichtbrechenden Struktur versehen ist, welche in mindestens einer Ebene senkrecht zu der Lichtaustrittsfläche eine Lichtabstrahlung oberhalb eines Grenzwinkels im wesentlichen verhindert, derart, daß in dieser Ebene eine Abschirmung des an der Lichtaustrittsfläche austretenden Lichts herbeigeführt wird.

Unter einer Abschirmung wird die Absenkung der mittleren Leuchtdichte der Lichtaustrittsfläche oberhalb eines Grenzwinkels zu einer Senkrechten zu der Lichtaustrittsfläche unter einen vorgegebenen Grenzwert verstanden.

Die Erfindung kann vorsehen, daß die lichtbrechende Struktur bzw. die lichtbrechenden Strukturen der Lichtauskoppeleinrichtung, die insbesondere in Platten oder Folien ausgebildet sein können, linienförmige lichtbrechende Strukturelemente aufweist oder aus diesen besteht, welche Seitenwände im wesentlichen parallel zur Linienrichtung aufweisen, die an dem freien Ende der Strukturelemente einen Winkel einschließen, der gemäß einer Ausführungsform größer als 90° ist, und für Leuchten mit einer Abschirmung vorzugsweise in einem Bereich von 90° bis 130° liegt und gemäß einer besonderen Ausführungsform der Erfindung in einem Bereich von 110° bis 128° liegen kann. Die vorangehend angegebenen Winkelbereiche von 90° bis 130° bzw. 110° bis 128° sind besonders für Platten aus einem Material mit einem Brechungsindex von ungefähr 1,49 bevorzugt, können jedoch auch bei Materialien mit einem anderen Brechungsindex verwendet werden, der nicht allzusehr von 1,49 verschieden ist. Dies gilt für gängige Materialien wie Polymethylmethacrylat oder Glas. Grundsätzlich können allerdings für Materialien mit von 1,49 verschiedenem Brechungsindex die bevorzugten Winkelbereiche verschieden sein, wobei sich diese bevorzugten Winkelbereiche für diese Brechungsindizes dadurch ermitteln lassen, daß die gleichen Abschirmwinkel für einen vorgegebenen Grenzwert der Leuchtdichte erzielt werden wie in dem vorangehend angegebenen Winkelbereich von 90° bis 130° bzw. 110° bis 128° bei einem Brechungsindex von 1,49. Grundsätzlich sollte gemäß den bevorzugten Ausführungsformen dieser Winkel bei Leuchten mit einer Abschirmung jedoch unabhängig vom Brechungsindex größer als 90° sein. Vorzugsweise ist dieser Winkel bei allen Strukturelementen gleich, die im übrigen auch alle die gleiche Querschnittsform und gegebenenfalls auch identische Abmessungen haben können. Für nicht abgeschirmte Lichtstärkeverteilungen können die relevanten Winkelbereiche verschieden sein, wobei der Prismenwinkel vorzugsweise von 90° verschieden ist.

Der Grenzwert der Leuchtdichte kann entsprechend geltenden Normen bzw. Normvorschlägen für abgeschirmte Leuchten bei 200 cd/m², 500 cd/m² oder 1000 cd/m² liegen. Der Abschirmwinkel liegt bei gängigen Anwendungen im Bereich von mehr als 45°, bevorzugt in einem Bereich von 50° bis 75°, insbesondere 50° bis 65°.

Die lichtbrechenden Elemente haben gemäß der bevorzugten Ausführungsform der Erfindung entlang der Linienrichtung einen konstanten Querschnitt, der insbesondere die Form eines Dreiecks annehmen kann. Die Seitenwände der Elemente müssen jedoch nicht eben sein, sondern können auch gekrümmt sein. Während gemäß einer bevorzugten Ausführungsform die Seitenwände an dem freien Ende der Strukturelemente direkt aneinander anschließen, kann auch vorgesehen sein, daß das freie Ende der Strukturelemente abgeflacht ist und die Seitenwände durch eine ebene oder gekrümmte Fläche verbunden sind. Im Fall von ebenen Seitenflächen oder Seitenflächen mit einem ebenen Abschnitt an dem freien Ende ist der vorangehend genannte Winkel dann durch die imaginäre Verlängerung der ebenen Seitenwände bzw. der ebenen Abschnitte der Seitenwände bestimmt. Im Fall von gekrümmten Seitenwänden kann der vorangehend erwähnte Winkel dem Winkel eines Dreiecks entsprechen, dem der Querschnitt der lichtbrechenden Elemente optimal, d.h. mit möglichst geringer Flächenabweichung zwischen der Fläche des Dreiecks und der Querschnittsfläche des lichtbrechenden Elements, einbeschrieben ist. Im Fall einer konvexen, d.h. nach außen gekrümmten Seitenwand, würde dieser Winkel durch den Schnittwinkel von zwei Tangenten gebildet, die an die Seitenlinien des Querschnitts des lichtbrechenden Elements angelegt werden, während im Fall einer konkaven, d.h. nach innen gekrümmten Seitenwand dieser Winkel durch zwei Geraden festgelegt würde, die jeweils zwischen dem Kopfpunkt und dem Fußpunkt mit einer Seitenlinie des Querschnitts, d.h. einer der Seitenwand im Querschnitt entsprechenden Linie, gelegt sind.

Erfindungsgemäß kann vorgesehen sein, daß in zwei übereinander angeordneten Platten oder Folien jeweils eine lichtbrechende Struktur mit linienförmigen Strukturelementen ausgebildet ist, wobei die Linien, welche die Geometrie der Struktur der ersten Platte definieren, mit den Linien, welche die Geometrie der Struktur der zweiten Platte definieren, einen nicht verschwindenden Winkel einschließen und vorzugsweise senkrecht auf diesen stehen.

Statt der vorangehend erwähnten linienförmigen Strukturen lassen sich auch andere lichtbrechende Strukturen verwenden, etwa pyramidenstumpfförmige Strukturen, wie sie beispielsweise aus US-PS 5 396 350 und US-PS 5 555 109 bekannt sind. Die lichtbrechende Struktur muß auch nicht notwendig eine Abschirmung erzeugen, sondern kann z.B. bei einer breitstrahlenden Leuchte die Lage des Maximums der Lichtstärkeverteilungskurve beeinflussen.

Die lichtbrechenden Strukturen lassen sich z.B. dadurch herstellen, daß eine Platte oder Folie aus einem gängigen lichtdurchlässigen Material, wie Glas, Polyester, Polystyrol, Polycarbonat, PET oder Polymethylmethacrylat, auf einer Fläche entsprechend bearbeitet oder geformt wird. Alternativ kann auch eine Folie, welche die lichtbrechende Struktur enthält, auf eine solche Platte aufgeklebt werden.

Weitere Merkmale und Vorteile der Erfindung ergeben sich aus der nachfolgenden detaillierten Beschreibung eines Ausführungsbeispiels anhand der beigefügten Zeichnungen.

Fig. 1        zeigt einen beispielhaften schematischen Querschnitt durch eine erfindungsgemäße Leuchte,

Fig. 2        zeigt schematisch einen vergrößerten Ausschnitt aus einem Querschnitt der Prismenplatten,

Fig. 3        zeigt schematisch einen vergrößerten Ausschnitt aus einem Querschnitt der Prismenplatten in einer Richtung senkrecht zu dem Querschnitt in Fig. 2,

Fig.4a       illustriert schematisch einen ersten Aspekt einer erfindungsgemäßen Leuchte,

Fig. 4b      zeigt schematisch die Anordnung der Leuchtenbestandteile in einem Querschnitt entlang der Linie IVb-IVb,

Fig. 4c      zeigt schematisch die Anordnung der Leuchtenbestandteile in einem Querschnitt entlang der Linie IVc-IVc,

Fig. 5a      illustriert schematisch einen zweiten Aspekt einer erfindungsgemäßen Leuchte in einer Ansicht von unten,

Fig. 5b      zeigt schematisch die Anordnung der Leuchtenbestandteile in einem Querschnitt gemäß der Linie Vb-Vb,

Fig. 5c      zeigt schematisch die Anordnung der Leuchtenbestandteile in einem Querschnitt entlang der Linie Vc-Vc,

Fig. 6a      illustriert schematisch einen dritten Aspekt einer erfindungsgemäßen Leuchte in einen Ansicht von unten,

Fig. 6b      zeigt schematisch die Anordnung der Leuchtenbestandteile in einem Querschnitt entlang der Linie VIb-VIb,

Fig. 7a      illustriert schematisch einen vierten Aspekt einer erfindungsgemäßen Leuchte in einer Ansicht von unten,

Fig. 7b      zeigt schematisch die Anordnung der Leuchtenbestandteile in einem Querschnitt entlang der Linie VIIb-VIIb,

Fig. 8a    illustriert schematisch einen fünfte Aspekt einer erfindungsgemäßen Leuchte in einer Ansicht von unten,

Fig. 8b    zeigt schematisch die Anordnung der Leuchtenbestandteile in einem Quer-schnitt entlang der Linie VIIIb-VIIIb,

Fig. 8c    zeigt schematisch die Anordnung der Leuchtenbestandteile in einem Quer-schnitt entlang der Linie VIIIc-VIIIc,

Fig. 9a    zeigt schematisch eine Ausführungsform einer erfindungsgemäßen Leuchte von unten,

Fig. 9b    zeigt schematisch die Anordnung der Leuchtenbestandteile in einem Quer-schnitt entlang der Linie IXb-IXb,

Fig. 9c    zeigt schematisch die Anordnung der Leuchtenbestandteile in einem Quer-schnitt entlang der Linie IXc-IXc,

Fig. 10a    zeigt schematisch eine weitere Ausführungsform einer erfindungsgemäßen Leuchte von unten,

Fig. 10b    zeigt schematisch die Anordnung der Leuchtenbestandteile in einem Quer-schnitt entlang der Linie Xb-Xb,

Fig. 10c    zeigt schematisch die Anordnung der Leuchtenbestandteile in einem Quer-schnitt entlang der Linie Xc-Xc,

Fig. 11a    zeigt schematisch eine weitere Ausführungsform einer erfindungsgemäßen Leuchte von unten,

Fig. 11b    zeigt schematisch die Anordnung der Leuchtenbestandteile in einem Quer-schnitt entlang der Linie XIb-XIb,

Fig. 11c    zeigt schematisch die Anordnung der Leuchtenbestandteile in einem Quer-schnitt entlang der Linie XIc-XIc,

Fig. 12a    zeigt schematisch eine weitere Ausführungsform einer erfindungsgemäßen Leuchte von unten,

Fig. 12b    zeigt schematisch die Anordnung der Leuchtenbestandteile in einem Querschnitt entlang der Linie XIIb-XIIb,

Fig. 12c    zeigt schematisch die Anordnung der Leuchtenbestandteile in einem Querschnitt entlang der Linie XIIc-XIIc,

Fig. 13a    illustriert schematisch einen weiteren Aspekt einer erfindungsgemäßen Leuchte von unten,

Fig. 13b    zeigt schematisch einen Querschnitt der Leuchte gemäß Fig. 12a entlang der Linie XIIIb- XIIIb,

Fig. 14    zeigt schematisch einen weiteren Aspekt einer erfindungsgemäßen Leuchte in einem schematischen Quer-schnitt,

Fig. 15    zeigt schematisch einen weiteren Aspekt einer erfindungsgemäßen Leuchte in einem schematischen Quer-schnitt.

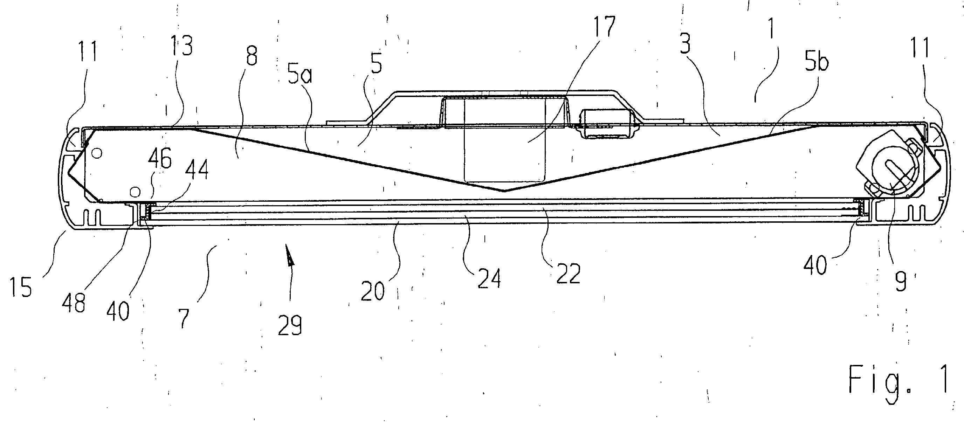

Das Prinzip einer Hohllichtleiterleuchte wird zunächst nachfolgend anhand der Fig. 1 bis 3 erläutert. Fig. 1 stellt einen beispielhaften Querschnitt einer erfindungsgemäßen Leuchte in einer Ebene senkrecht zu der Lampenachse dar. Dieser Querschnitt kann, ebenso wie die in Fig. 1 bis 3 dargestellten lichttechnischen Elemente, in verschiedenen Bereichen der Leuchte unterschiedlich ausgebildet sein, wie nachfolgend noch näher erläutert wird. Sofern nichts anderes erwähnt ist, sind gleiche oder gleichwirkende Bestandteile mit denselben Bezugszeichen versehen.

Die in Fig. 1 dargestellte Leuchte weist ein allgemein mit 1 bezeichnetes Gehäuse auf, in dem ein allgemein mit 3 bezeichneter Hohllichtleiter angeordnet ist. Der Hohllichtleiter 3 besteht aus einer reflektierenden Dachwand 5, die in dem Bereich des dargestellten Querschnitts zwei in einem stumpfen Winkel zueinander geneigten Hälften 5a und 5b aufweist, reflektierenden Stirnwänden (nicht dargestellt) an den beiden Stirnseiten sowie einer Lichtauskoppeleinrichtung 7, die nachfolgend noch näher beschrieben wird. Die Stirnwände, die Dachwand 5 und die Lichtauskoppeleinrichtung 7 legen zusammen einen Hohlraum 8 mit reflektierenden Wänden fest.

Auf den beiden Schmalseiten ist der Hohllichtleiter 3 jeweils offen. An diese offenen Schmalseiten angrenzend ist jeweils eine Lampe 9 (nur auf einer Seite dargestellt) angeordnet, welche über einen Einkoppelreflektor 11 Licht in den Hohllichtleiter 3 auskoppelt.

Das Gehäuse 1 besteht aus einer oberen Gehäusehälfte 13, an welcher die Dachwand 5 befestigt ist, sowie einer den Hohllichtleiter und die Lichtauskoppeleinrichtung 7 von unten übergreifenden Seitenleiste 15, welche die Lichtauskoppeleinrichtung an dem Hohllichtleiter hält. An dem oberen Gehäuseteil 13 ist in dem Bereich des dargestellten Querschnitts ein Vorschaltgerät 17 befestigt, welches sich in den Bereich oberhalb des Hohllichtleiters 3 erstreckt, in dem die beiden Dachhälften 5a und 5b einen verringerten Abstand zu der Lichtauskoppeleinrichtung 7 haben und dementsprechend oberhalb des Hohllichtleiters 3 einen vergrößerten Raumbereich in dem Gehäuse festlegen, so daß insgesamt eine relativ geringe Bauhöhe erreicht werden kann, was bei Anbau- oder Pendelleuchten von Vorteil ist.

Die Lichtauskoppeleinrichtung besteht aus einer Trägerplatte 20, auf der ein Paar übereinander angeordneter Prismenplatten 22 und 24 angeordnet sind. Die Trägerplatte bildet die Lichtauskoppelfläche der Lichtauskoppeleinrichtung 7, die im Fall dieser Leuchte mit der Lichtaustrittsfläche 29 zusammenfällt. Die Prismenplatten sind auf einer Grundfläche mit einer Prismenstruktur versehen, welche eine Abschirmung des über die Lichtauskoppeleinrichtung austretenden Lichts erzeugt und welche nachfolgend genauer erläutert wird.

Die Prismenplatten 22 und 24 sind mit einer Struktur versehen, welche eine Lichtauskopplung oberhalb eines Grenzwinkels zu der Senkrechten zu der Lichtaustrittsfläche in bestimmten Ebenen im wesentlichen verhindert und dadurch eine Abschirmung, d.h. eine Absenkung der mittleren Leuchtdichte der Lichtaustrittsfläche unter einen Grenzwert, z.B. 200 cd/m$^2$, 500 cd/m$^2$ oder 1000 cd/m$^2$, erzeugt, wie er von geltenden Normen bzw. Normvorschlägen gefordert wird.

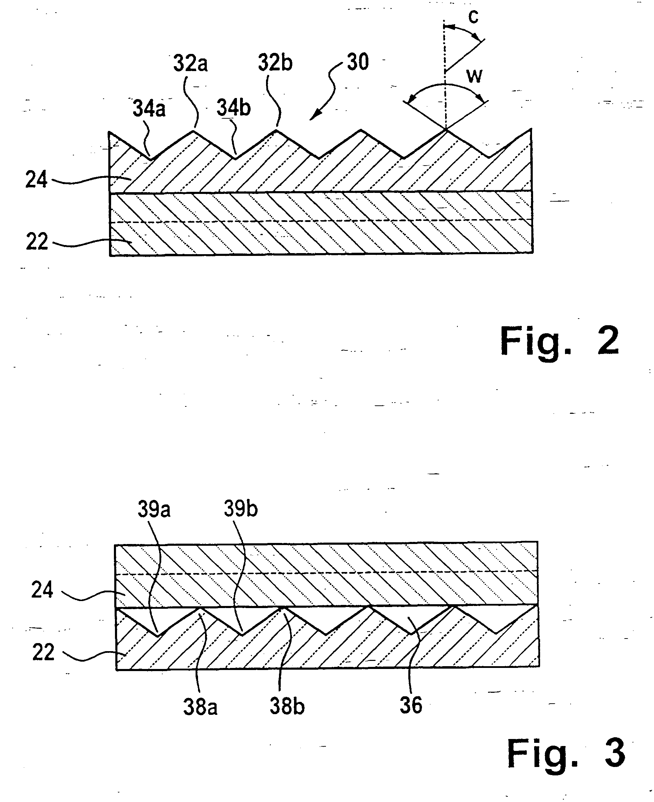

Die Prismenplatte 24 weist auf ihrer von dem Hohlraum 8 abgewandten Seite eine Struktur von parallelen Prismen 30 auf, die in einem Querschnitt senkrecht zu ihrer Längsachse eine dreieckige Form besitzen, was man anhand von Fig. 2 erkennen kann. Fig. 2 zeigt, daß die Prismen unmittelbar aneinander angrenzen, gleichmäßig voneinander beabstandete Grate 32a, 32b, ... (nachfolgend kollektiv mit 32 bezeichnet) aufweisen und durch gleichmäßig voneinander beabstandete Vertiefungen 34a, 34b, ..., nachfolgend kollektiv mit 34 bezeichnet, voneinander getrennt sind. Die Vertiefungen 34 und die Grate 32 bilden auf der von dem Hohlraum 8 abgewandten Seite der Platte 24 gerade parallele Linien.

Die Abschirmung kann z.B. durch Totalreflexion in den Prismen erzeugt werden. Licht in den Prismen wird beim Einfall auf die Grenzfläche zu einem optisch dünneren Medium, z.B. Luft, vollständig in die Prismen zurückreflektiert, wenn der Einfallswinkel größer als der Winkel der Totalreflexion ist. Dementsprechend ist der Austrittswinkel, bezogen auf die Grenzflächen der Prismen, begrenzt. Die Seitenwände der Prismen zwischen den Graten 32 und den Vertiefungen 34 stehen jedoch schräg zu der Lichtaustrittsfläche, so daß die Begrenzung des Lichtaustrittswinkels durch den Grenzwinkel der Totalreflexion nicht notwendigerweise eine Abschirmung bedeutet. Ein mögliches Kriterium für eine Abschirmung läßt sich dadurch ableiten, daß für Strahlengänge in den Prismen bis zu einer vorgegebenen Höchstzahl k (z.B. k = 1, 2, 3 oder 4) von inneren Reflexionen in den Prismen vor einem Lichtaustritt aus der Struktur der Austrittswinkel bezüglich einer Senkrechten zu der Grundfläche der lichtbrechenden Struktur maximal gleich dem Abschirmwinkel ist. Andere Abschirmmechanismen oder Abschirmkriterien können alternativ oder ergänzend auch verwendet werden.

Es hat sich gezeigt, daß für Prismen mit einem Querschnitt in der Form eines gleichschenkligen Dreiecks eine gute Abschirmung erreicht wird, wenn zwischen dem Abschirmwinkel C und dem Prismenwinkel w für eine Grenzfläche zu Luft die folgenden Relationen bestehen:

$$w/2 \leq C \tag{1}$$

$$w \geq 2 \, (2 \arcsin(1/n) + 90)/3 \tag{2}$$

$$\tan(w/2) \leq (n \sin(\arcsin(1/n) - 3 \, w/2) + \cos(w/2)) \, / \, (n \cos(\arcsin(1/n) - 3 \, w/2) + \sin(w/2)); \tag{3}$$

wobei n der Brechungsindex der Platte 24 ist.

Der Prismenwinkel w liegt bei den derzeit bevorzugten Ausführungsformen bei einem Brechungsindex von 1,49 im Bereich von 90° bis 130°, besonders bevorzugt im Bereich von 110° bis 128°.

Anstelle der in Fig. 2 dargestellten dreieckförmigen Prismen können auch andere Prismenformen verwendet werden.

Die Prismenplatte 22 ist wie die Platte 24 mit einer Struktur von parallelen geradlinigen Prismen 36 versehen, welche Grate 38a, 38b, ... (nachfolgend kollektiv mit 38 bezeichnet) auf-weisen und durch Vertiefungen 39a, 39b, ... (nachfolgend mit 39 bezeichnet) voneinander getrennt sind. Ebenso wie die Prismen 30 erzeugen die Prismen 36 in der Richtung quer zu ihrer Längsrichtung eine Abschirmung, wobei insbesondere die Relationen (1) bis (3) erfüllt sein können. Wie man anhand von Fig. 2 und 3 erkennt, ist die Längsrichtung der Prismen 30 senkrecht zu der Längsrichtung der Prismen 36. Die Prismenplatten 22 und 24 erzeugen daher zusammen eine Abschirmung in zueinander senkrechten Ebenen, die senkrecht auf der Lichtaustrittsfläche 3 stehen. Der Abschirmwinkel C kann in diesen beiden Ebenen verschieden sein. Dementsprechend können die Prismen 30 und 36 auch einen verschiedenen Prismenwinkel w aufweisen. Der Vollständigkeit halber sei angemerkt, daß die dargestellten Prismen auch eine Abschirmung in Ebenen zwischen den beiden Ebenen senkrecht zu der jeweiligen Längsrichtung erzeugen können. Ähnliches kann auch für andere Prismenformen gelten.

Die Prismenplatten 22 und 24 sind, wie in Fig. 1 zu sehen ist, an ihren äußeren Seiten durch ringsum laufende Rahmenelemente 40 an der Trägerplatte 20 gehalten. Das Rahmenelement 40 weist einen zentralen Abschnitt 44 auf, an den sich an den beiden Enden Flansche 46 und 48 rechtwinklig anschließen, die in entgegengesetzte Richtungen weisen. Der Flansch 48 ist auf der Platte 20 aufgeklebt. Der Flansch 46 übergreift die Platten 22 und 24 und hält diese dadurch formschlüssig an der Trägerplatte 20. Insgesamt bilden vier Rahmenelemente 40 einen Rahmen für die beiden Platten 22 und 24, welcher diese an der Trägerplatte 20 hält. Die Trägerplatte 20, die Prismenplatten 22 und 24 sowie die Rahmenelemente 40 bilden eine vorgefertigte Einheit, welche in die Öffnung des Hohllichtleiters 3 eingesetzt und durch die Seitenleisten 15 an dem Hohllichtleiter gehalten wird. Die Platten und die zugehörigen Prismenstrukturen sind dabei durch die Rahmen 40 und die Fixierung an der Trägerplatte 20 korrekt zueinander ausgerichtet.

Das Licht von der Lampe 9 bzw. dem Einkoppelreflektor 11 fällt zu einem Teil direkt auf die Platte 22 ein. Ein Teil dieses Lichts tritt durch die Platten 22 und 24 hindurch und an der Lichtaustrittsfläche 29 aus. Ein weiterer Teil des Lichts wird an der Platte 22 reflektiert. Die Dachwand 5 reflektiert das auf sie direkt von der Lampe 9 bzw. dem Einkoppelreflektor 11 einfallende Licht sowie das zu ihr von der Platte 22 zurückreflektierte Licht nach unten zu der Lichtauskoppeleinrichtung 7.

Der Grad der Lichtauskopplung an der Prismenplatte 22 hängt unter anderem von dem Einfallswinkel der einfallenden Lichtstrahlen ab. Es hat sich gezeigt, daß sich eine gleichmäßigere Lichtstärkeverteilungskurve der Leuchte erreichen läßt, wenn die reflektierende Dachwand zu der Lichtauskoppeleinrichtung geneigt ist und sich der Abstand zwischen der Lichtauskoppeleinrichtung und der Dachwand in Richtung weg von der Lampe verringert. Insbesondere wird dadurch die Lichtstärkeverteilungskurve im Bereich von 0° vergleichmäßigt und ein Minimum der Lichtstärkeverteilung in diesem Bereich vermieden oder abgeschwächt. Es hat sich weiterhin gezeigt, daß eine solche Gestaltung zu einer Verbesserung des Leuchtenwirkungsgrades führt. Daher besteht die Dachwand 5 aus zwei geraden, zueinander geneigten Abschnitten 5a und 5b, die so angeordnet sind, daß die Höhe des Hohlraums 8 in der Mitte am kleinsten und an dem äußeren Rand am größten ist.

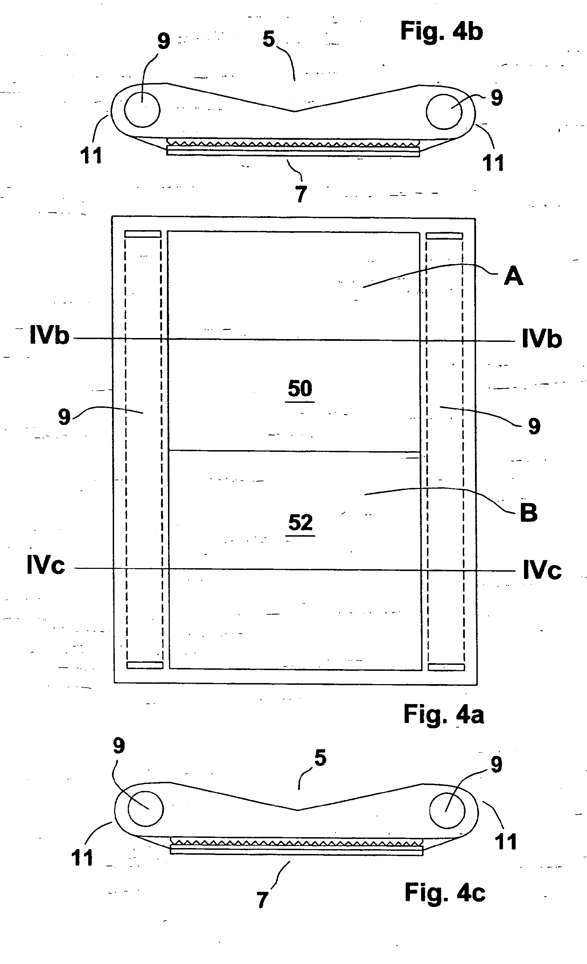

Wie vorangehend erwähnt wurde, kann der Hohllichtleiter in verschiedenen Bereichen unterschiedlich ausgebildet sein. In den Fig. 4a bis 4c ist eine Leuchte dargestellt, bei welcher die Lichtauskoppeleinrichtung in verschiedenen Bereichen A und B verschieden ausgebildet ist. In Fig. 4a bezeichnen die beiden Bezugszeichen 50 und 52 jeweils ein Paar von übereinanderliegenden Prismenplatten, die jeweils eine Struktur von parallelen geradlinigen Prismen mit dreieckförmigem Querschnitt aufweisen, wobei die Richtung der Linien in der oberen Platte senkrecht zu der Richtung der Linien in der unteren Platte ist. Die Prismenplatten des Paares 50 unterscheiden sich von denjenigen des Paares 52 durch den Prismenwinkel. Während - bei einem Brechungsindex von 1,49 - die Prismen des Prismenplattenpaares 50 Prismenwinkel aufweisen, die im Bereich von 110° bis 128° liegen, liegen die Prismenwinkel bei dem Prismenplattenpaar 52 zwischen 60° und 75° oder 115° und 175°, vorzugsweise zwischen 145° und 175°. Während durch die Prismen des Prismenplattenpaares 50 eine abgeschirmte Lichtstärkeverteilungskurve erzeugt wird, wird durch die Prismen des Prismenpaares 52 eine im ersten genannten Winkelbereich tiefstrahlende bzw. im zweiten genannten Winkelbereich breitstrahlende Lichtstärkeverteilungskurve erzeugt, die nicht oder nur wenig abgeschirmt ist und im Bereich von 0° ein Minimum hat. Fig. 4b und Fig. 4c zeigen jeweils einen Querschnitt entlang den Linien IVb-IVb bzw. IVc-Ivc, wobei dieser Querschnitt nur schematisch die Anordnung der restlichen Leuchtenkomponenten in dem Hohllichtleiter zeigt. Man erkennt, daß der Hohllichtleiter, abgesehen von den unterschiedlichen Prismenplattenpaaren 50 und 52, in den beiden Bereichen gleich aufgebaut ist. Die beiden Prismenplattenpaare 50 und 52 können durch einen Rahmen 40, der an ihrem äußeren Rand umläuft, an einer Trägerplatte 20 gehalten werden, wie dies vorangehend erläutert-wurde. Die beiden Prismenplattenpaare können jeweils auch durch einen eigenen Rahmen an der Trägerplatte 20 gehalten werden, der sie jeweils auf allen vier Seiten umschließt.

Die Form und Größe der Bereiche A und B kann im wesentlichen beliebig entsprechend der jeweiligen lichttechnischen Aufgabe gewählt werden.

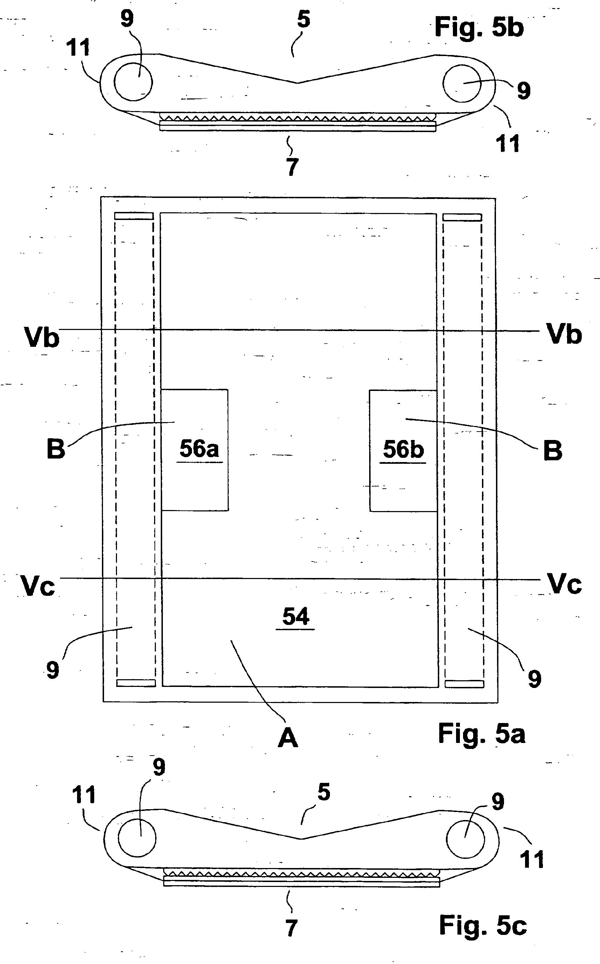

Fig. 5a bis 5c zeigen eine abgewandelte Ausführungsform der Ausführungsform gemäß der Fig. 4a bis 4c mit einem Bereich A und zwei Bereichen B mit einer verschiedenen Prismenstruktur: Hier erstreckt sich ein Prismenplattenpaar 54 über die gesamte Lichtaustrittsfläche der Leuchte bis auf zwei Teilbereiche am linken und rechten Rand, in denen sie eine Aussparung aufweisen, in die Prismenplattenpaare 56a und 56b eingesetzt sind. Die Prismenplatten der Prismenplattenpaare 54 und 56a bzw. 56b sind wieder wie vorangehend mit Bezug auf Fig. 2 und 3 erläutert ausgebildet. Sie weisen jeweils parallele linienförmige Prismen mit einem dreieckigen Querschnitt auf, wobei die Prismen der einen Platte senkrecht zu denen der anderen Platte stehen. Die Prismen des Prismenplattenpaares 54 besitzen wieder einen Pris-menwinkel im Bereich von 110° bis 128°, während die Prismen der Prismenplattenpaare 56a und 56b Prismenwinkel im Bereich von 60 bis 75° bzw. 115° bis 175° aufweisen.

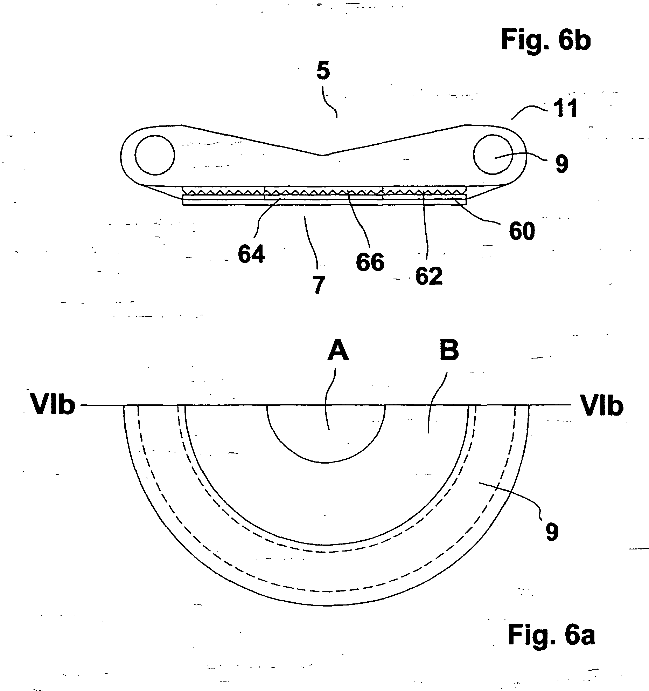

Fig. 6a und 6b zeigen ein Ausführungsbeispiel für eine Rundleuchte. Die Lampe 9 ist in diesem Fall eine Ringlampe und die reflektierende Dachwand 5 besitzt eine Kegelform. Die Lichtauskoppeleinrichtung besteht in diesem Fall aus einem Paar von ringförmigen Prismenplatten 60 und 62, die den Bereich B bilden, sowie einem Paar von kreisscheibenförmigen Prismenplatten 64 und 66, welche in der zentralen Öffnung der Prismenplatten 60 und 62 eingesetzt sind und den Bereich A bilden. Die Prismenplatten 60 bis 66 weisen jeweils an einer Grundfläche eine Struktur von linienförmigen Prismen mit einem dreieckigen Querschnitt auf, ähnlich wie in Fig. 2 und 3 gezeigt. Aufgrund der Rotationssymmetrie der Leuchte sind bei diesem Ausführungsbeispiel die Prismen der Prismenplatten 62 und 66 kreisringförmig ausgebildet und die Prismen der Prismenplatten 60 und 64 sternförmig, so daß die Linien, denen die Prismen der Prismenplatten 60 und 64 folgen, senkrecht zu den entsprechenden Linien der Platten 62 und 66 stehen. Alternativ können auch die Prismen jeweils geradlinig sein, wie dies vorangehend mit Bezug auf Fig. 2 und 3 erläutert wurde. Die Prismen der Prismenplatten 64 und 66 weisen wieder einen Prismenwinkel im Bereich von 110° bis 128° auf, während die Prismen der Prismenplatten 60 und 62 einen anderen Prismenwinkel, z.B. im Bereich von 60° bis 75° aufweisen, so daß der Bereich der Prismenplatten 64 und 66 eine abgeschirmte Lichtstärkeverteilung und die beiden Prismenplatten 60 und 62 eine tiefstrahlende Lichtstärkeverteilung, wie vorangehend beschrieben, erzeugen. Der Bereich der Prismenplatten 64 bis 66 ist dabei vollständig von dem Bereich der Prismenplatten 60 und 62 umschlossen. Dies kann auch bei einer viereckigen Lichtaustrittsfläche der Fall sein.

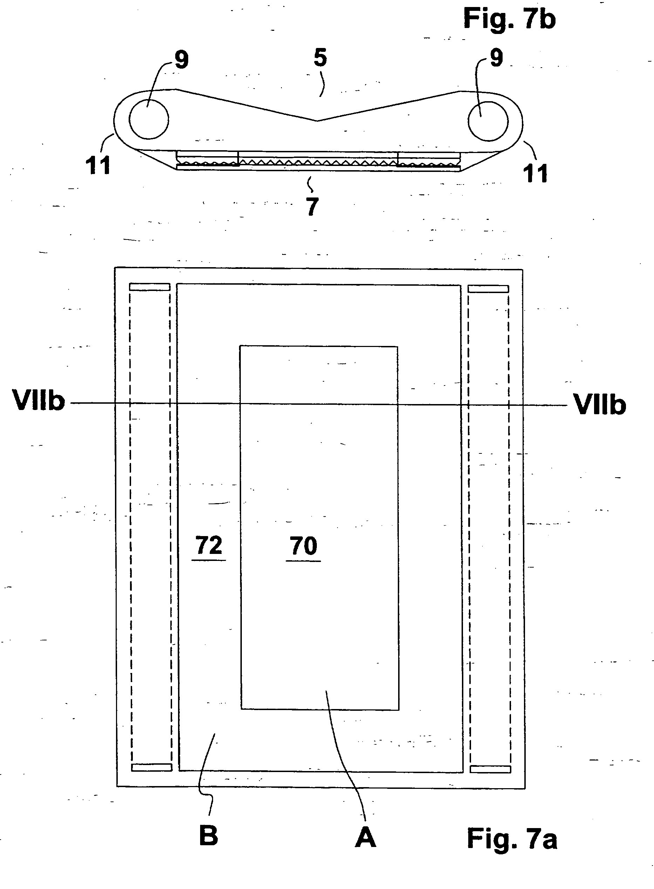

Fig. 7a und 7b zeigen ein Ausführungsbeispiel mit einer viereckigen Lichtaustrittsfläche, bei dem ein Prismenplattenpaar 70 im Bereich A, dessen Prismen, wie vorangehend mit Bezug auf Fig. 4a für das Prismenplattenpaar 50 beschrieben, ausgebildet und ausgerichtet sind, von einem Prismenplattenpaar 72 in dem Bereich B umschlossen ist, dessen Prismen wie die Prismen des Prismenplattenpaares 52 ausgebildet und ausgerichtet sind, wie vorangehend mit Bezug auf Fig. 4a beschrieben.

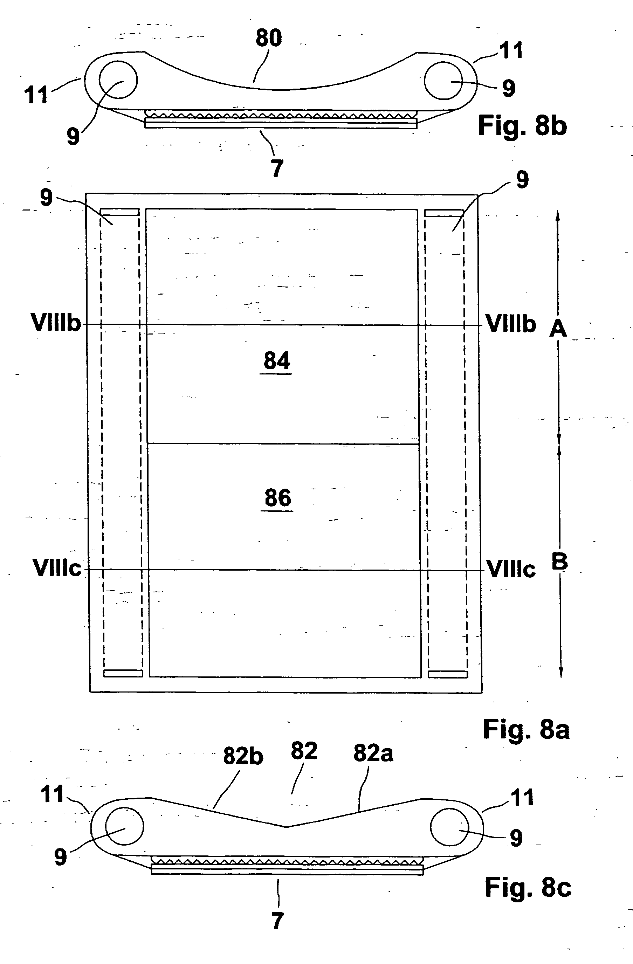

Fig. 8 bis 8c zeigen eine weitere Leuchte. Diese Leuchte besitzt zwei Bereiche mit einer unterschiedlichen reflektierenden Dachwand. Im Bereich A ist die Dachwand 80, von der Seite des Hohlraums 8 aus gesehen, konvex nach innen gekrümmt, während in dem Bereich B die Dachwand 82 aus zwei, in einem stumpfen Winkel zueinander geneigten ebenen Hälften 82a und 82b besteht, wie dies vorangehend mit Bezug auf Fig. 1 erläutert wurde. Diese unterschiedliche Gestaltung der Dachwand kann mit einer unterschiedlichen Gestaltung der Prismenplatten der Lichtauskoppeleinrichtung einhergehen. In Fig. 8a ist dargestellt, daß die Lichtauskoppeleinrichtung aus zwei Prismenplattenpaaren 84 und 86 besteht, wobei die Prismen des Paares 84 wie vorangehend für das Prismenplattenpaar 50 des Ausführungsbeispiels der Fig. 4a erläutert ausgebildet und zueinander ausgerichtet sind, während die Prismenstrukturen der Platten des Paares 86 wie die Prismen der Platten des Paares 52 gemäß dem Ausführungsbeispiel der Fig. 4a ausgebildet und ausgerichtet sind. Insbesondere besitzen die Prismenplatten des Prismenplattenpaares 84 einen Prismenwinkel im Bereich von 110° bis 128° und die Prismen der Platten des Paares 86 einen Prismenwinkel im Bereich von 60° bis 75°. Die Prismenwinkel der Paare 84 und 86 können auch gleich sein, wobei in diesem Fall die unterschiedliche Dachwand zu einer unterschiedlichen Lichtstärkeverteilungskurve führt.

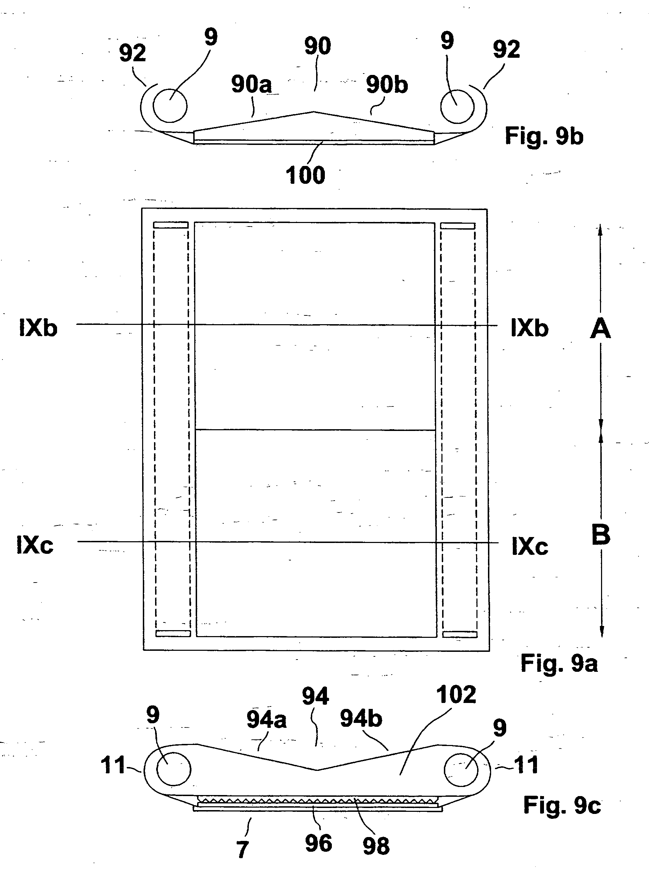

Fig. 9a bis 9c zeigen ein Ausführungsbeispiel einer erfindungsgemäßen Leuchte, bei welchem eine unterschiedliche Gestaltung der Dachwand dazu führt, daß in verschiedenen Bereichen der Leuchte unterschiedliche Direkt- und Indirektanteile abgegeben werden. In dem Bereich A (Querschnitt IXb-IXb) besteht die Dachwand 90 aus zwei sich schräg nach oben erstreckenden ebenen Abschnitten 90a und 90b, deren Innen- und Außenseite reflektierend ausgebildet ist. Von den Lampen 9 wird auf die Außenseite dieser Wandabschnitt Licht eingestrahlt und zur Abgabe eines indirekten Lichtanteils reflektiert. Die Einkoppelreflektoren 92 sind dabei so ausgestaltet, daß gleichzeitig auch ein Teil des Lichts der Leuchten ohne Reflexion zur Abgabe eines indirekten Lichtanteils austreten kann.

In dem Bereich B (Querschnitt IXc-IXc) ist die Dachwand 94 dagegen, wie vorangehend mit Bezug auf Fig. 1 beschrieben, aus zwei nach innen geneigten ebenen Abschnitten 94a und 94b ausgebildet, auf deren reflektierende Innenseiten von den Lampen Licht eingestrahlt wird. In dem Bereich des Querschnitts IXc-IXc besteht die Lichtauskoppeleinrichtung aus zwei Prismenplatten 96 und 98, die wie vorangehend mit Bezug auf Fig. 2 und 3 für die Prismenplatten 22 und 24 beschrieben ausgebildet und ausgerichtet sind. In dem Bereich des Querschnitts IXb-IXb besteht die Lichtauskoppeleinrichtung dagegen aus einer einfachen Platte 100, die zur besseren Lichtauskopplung mit einer unregelmäßigen, diffus streuenden Struktur oder dergleichen ausgebildet sein kann. Dabei bilden die Dachwände 90, 94 und die Platten 96, 98 und 100 einen Hohllichtleiter mit einem durchgehenden Hohlraum 102, so daß Licht aus dem Bereich B in den Bereich A eintreten und über die Platte 100 austreten kann. In einer Abwandlung der dargestellten Leuchte kann die Platte 100 gegebenenfalls auch entfallen. Es kann ebenfalls vorgesehen sein, daß der Hohllichtleiter sich nicht über den Bereich B hinaus erstreckt und im Grenzbereich zwischen den Abschnitten A und B eine reflektierende Wand aufweist, so daß Licht aus diesem Bereich nicht in den Bereich A eintritt. In diesem Fall wird in dem Bereich A kein direkter Lichtanteil abgegeben. Die Platte 100 kann dann gegebenenfalls als Abdeckplatte beibehalten werden.

Die Dachwand 90 bzw. 94 kann auch teildurchlässig ausgebildet sein, so daß in dem Bereich A ein Teil des Lichts der Lampen 9 in den Hohlraum des Hohllichtleiters über die Wände 90a und 90b eintritt und andererseits im Bereich B ein Teil des Lichts über die Wände 94a und 94b ausgekoppelt wird, der zum indirekten Lichtanteil der Leuchte beiträgt.

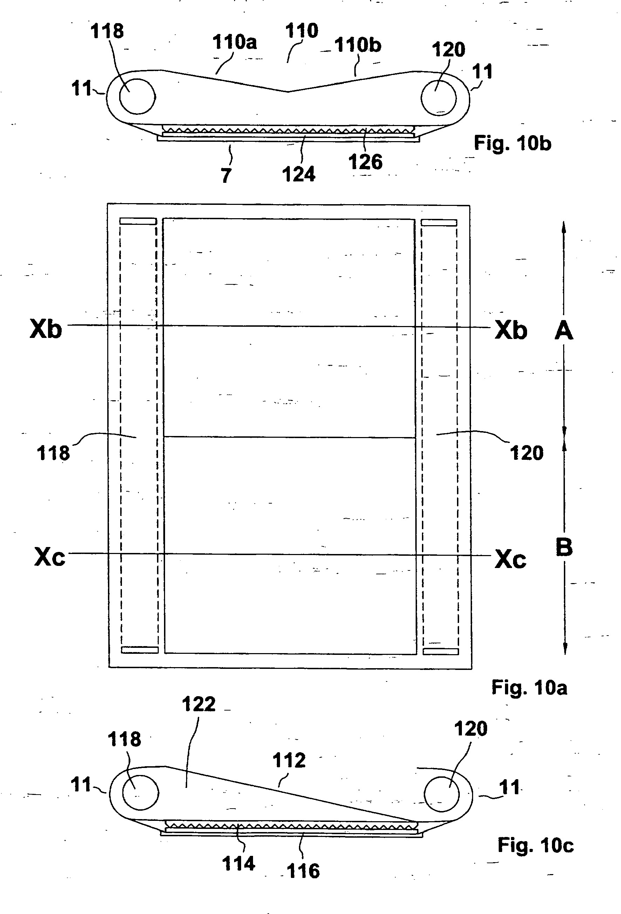

Fig. 10a bis 10c zeigen eine Abwandlung der Ausführungsform gemäß den Fig. 9a bis 9c, bei der die Dachwand 110 in dem Bereich B mit zwei nach innen geneigten ebenen Abschnitten 110a und 110b ausgebildet ist, während in dem Bereich A die Dachwand 112 eine ebene Fläche bildet, die zu den Prismenplatten 114 und 116 geneigt ist und auf einer Seite keilförmig an diese Prismenplatten anschließt. Die Dachwand 112 ist auf ihrer Innen- und Außenseite reflektierend ausgebildet. In dem Bereich A reflektiert sie das Licht der Lampe 118 zu den Prismenplatten 114 und 116, während sie das Licht der Lampe 120 von dem Hohlraum 122 weg zur Abgabe eines indirekten Lichtanteils reflektiert. In dem Bereich B wird hingegen das Licht der Lampen 118 und 120 von den beiden Dachwandabschnitten 110a und 110b jeweils zu den entsprechenden Prismenplatten 124 und 126 reflektiert, so daß über der gesamten Länge der Leuchte ein direkter Lichtanteil über die Prismenplatten 114 und 116 bzw. 124 und 126 abgegeben wird und in dem Bereich A zusätzlich ein indirekter Lichtanteil durch Reflexion des Lichts der Lampe 120 an der Wand 112 abgegeben wird, wobei die Lichtstärkeverteilung des direkten Anteils in Bereich B symmetrisch und in Bereich A asymmetrisch bzgl. einer Ebene parallel zu den Lampen 118 und 120 ist. Die Platten 114 und 116 bzw. 124 und 126 sind wie vorangehend mit Bezug auf Fig. 2 und 3 beschrieben ausgebildet und zueinander ausgerichtet. Um die Lichtstärkeverteilung über der Lichtaustrittsfläche zu gestalten, kann der Prismenwinkel bei den beiden Platten 114 und 116 von demjenigen der beiden Platten 124 und 126 verschieden sein.

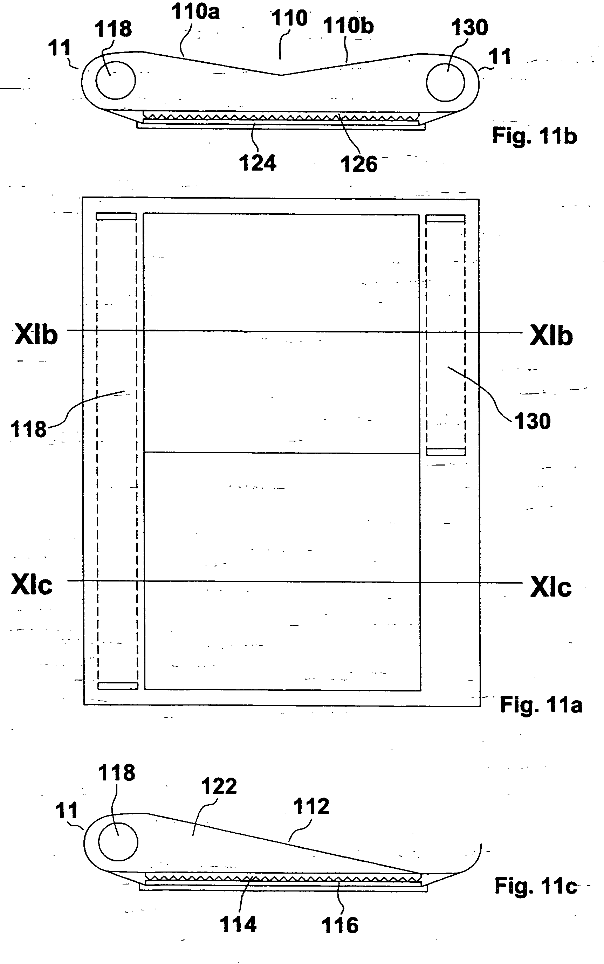

Fig. 11a bis 11c zeigen eine Abwandlung des Ausführungsbeispiels der Fig. 10, bei dem sich eine der beiden Lampen, nämlich die Lampe 130, sich nur über die Länge des Bereichs B erstreckt und in dem Bereich A nur eine einzige Lampe vorhanden ist. Die restlichen Bestandteile entsprechen den Bestandteilen des Ausführungsbeispiel gemäß Fig. 10a bis 10c und sind mit demselben Bezugszeichen bezeichnet.

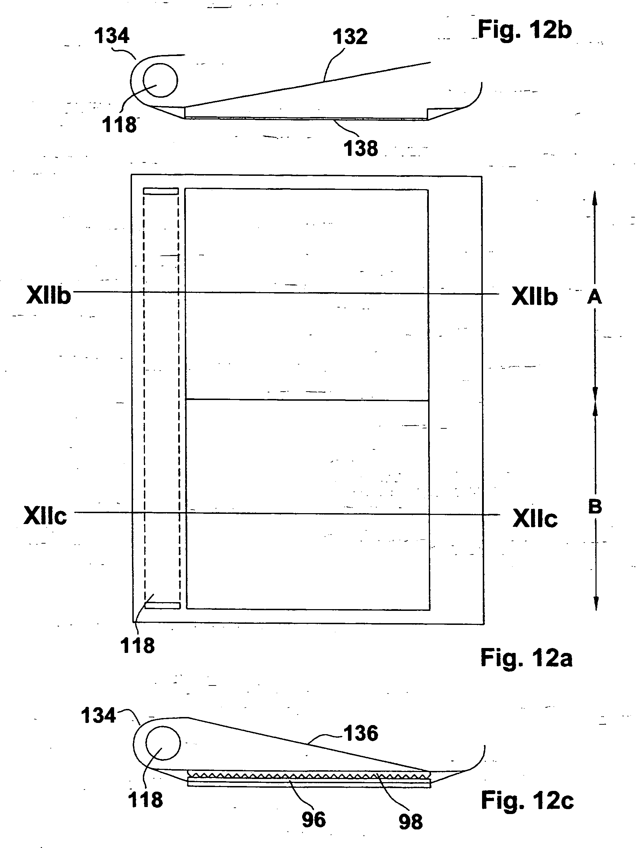

Fig. 12a bis 12c zeigen eine Abwandlung des Ausführungsbeispiels gemäß Fig. 9, bei dem in dem Bereich A sich eine reflektierende Dachwand 132 von dem unteren Rand des der Lampe 118 zugeordneten Einkoppelreflektors 134 schräg nach oben erstreckt, so daß das Licht der Lampe 118 zur Abgabe eines Indirektanteils an der Wand 132 nach oben reflektiert wird, während in dem Bereich B eine Dachwand 136 sich von dem oberen Rand des Einkoppelreflektors 134 schräg nach unten erstreckt und in einem spitzen Winkel keilförmig an die Prismenplatten 96 und 98 anschließt. Die Lampe 118 gibt in diesem Bereich ihr Licht in den dadurch gebildeten Hohllichtleiter ab, aus dem es über die Prismenplatten 96 und 98 ausgekoppelt wird. Der Hohllichtleiter in dem Bereich B kann zu dem Bereich unter der Dachwand 132 hin offen sein, so daß über die transparente Platte 138 ein direkter Lichtanteil auch in dem Bereich A abgegeben wird, oder zu dem Bereich A hin verschlossen sein, wie dies vorangehend mit Bezug auf Fig. 9a bis 9c erläutert wurde.

In Fig. 12a bis 12c ist eine einlampige Ausführungsform dargestellt. Es kann jedoch auch vorgesehen sein, daß auf der der Lampe 118 gegenüberliegenden Seite der Leuchte eine weitere Lampe vorgesehen ist, bezüglich derer die Rolle der Dachwände 132 und 136 vertauscht ist.

Gemäß einem weiteren Aspekt der Erfindung kann in Teilbereichen der Lichtaustrittsfläche durch eine entsprechende Gestaltung der Lichtauskoppeleinrichtung eine unterschiedliche Leuchtdichte und/oder eine unterschiedliche Farbe des austretenden Lichts erzeugt werden.

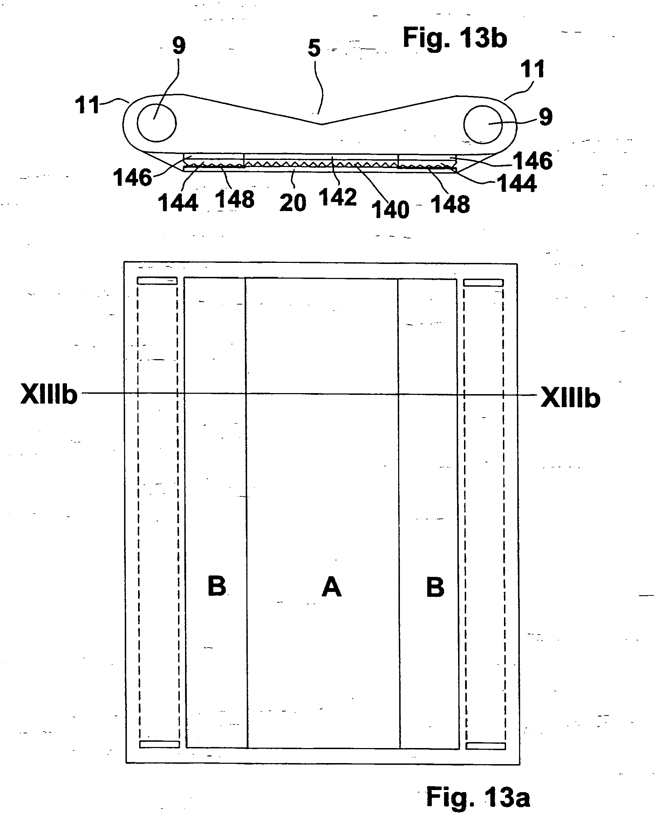

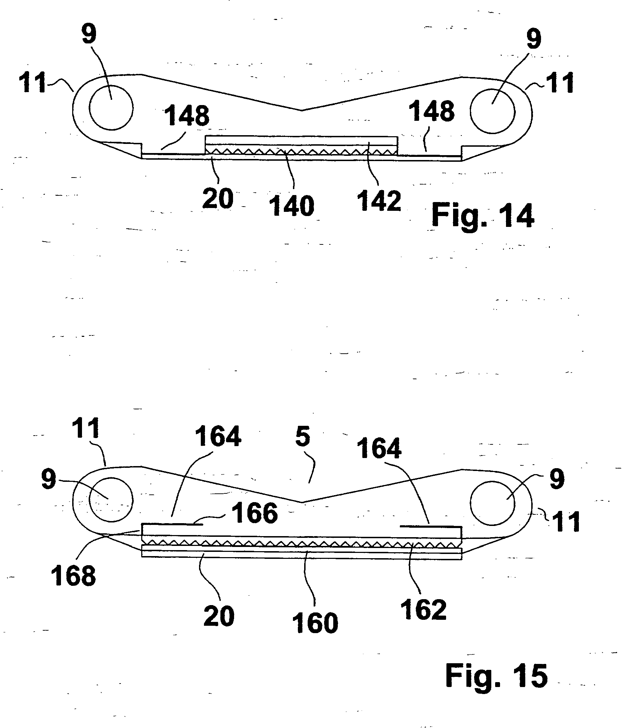

Fig. 13a und 13b zeigen eine Leuchte, bei der die Lichtauskoppeleinrichtung 7 in dem Bereich A aus einem ersten Paar von Prismenplatten 140 und 142 besteht, während in den Bereichen B, die rechts und links an dem Bereich A anschließen und sich, wie der Bereich A, über die gesamte Länge der Leuchte erstrecken, die Lichtauskoppeleinrichtung aus einem Paar von Prismenplatten 144 und 146 besteht. Die Prismen 140 bis 146 sind wie vorangehend mit Bezug auf Fig. 2 und 3 beschrieben ausgebildet und ausgerichtet und die Prismenplatten 140 und 142 weisen einen anderen Prismenwinkel auf als die Prismen der Platten 144 und 146. Die Prismenplatten 140 bis 146 sind insgesamt auf einer Trägerplatte 20 montiert. Zwischen den Prismenplatten 144 und der Trägerplatte ist eine Folie 148 eingelegt, welche teilweise Licht absorbiert und/oder einen Farbfilter bildet, so daß das in den Bereichen B austretende Licht eine andere Leuchtdichte und/oder eine andere Farbe aufweist als das in dem Bereich A austretende Licht. Ansonsten ist die Leuchte ähnlich wie in Fig. 1 dargestellt ausgebildet. Gleiche oder gleichwirkende Bestandteile sind daher mit den gleichen Bezugszeichen versehen. Bei dem Ausführungsbeispiel gemäß Fig. 13 sollte die Folie 148 nicht streuend sein, um die durch die Prismenplatten erzeugten Abstrahleigenschaften, insbesondere eine Abschirmung, nicht zu beeinträchtigen. Sofern in den Bereichen B keine besondere Gestaltung der Lichtstärkeverteilungskurve erforderlich oder gewünscht ist, können die Prismenplatten in diesem Bereich auch wegfallen, so daß das Licht in den Bereich B direkt auf die Folie 148 einfällt, die in diesem Fall auch streuend sein kann. Eine derartige Ausführungsform ist in Fig. 14 dargestellt. Anstelle einer Folie kann eine entsprechende Beschichtung der Trägerplatte vorgesehen sein.

Fig. 15 zeigt eine Leuchte, bei welcher eine verringerte Leuchtdichte in den Seitenbereichen dadurch erzeugt wird, daß über zwei sich über die gesamte Länge und Breite der Lichtaustrittsfläche erstreckenden Prismenplatten 160 und 162, die jeweils eine über ihrer gesamten Fläche einheitlichen lichtbrechenden Struktur aufweisen, in Teilbereichen, z.B. am rechten und linken Rand, ein winkelförmiges Reflektorelement 164 angeordnet ist, dessen einer Schenkel 166 parallel zu den Platten 160 und 162 und dessen zweiter Schenkel 168 senkrecht zu den Platten 160 und 162 ist. Das Reflektorelement 164 ist auf seiner Innen- und Außenseite jeweils reflektierend ausgebildet. Das Licht von der jeweils benachbarten Lampe 9 kann daher nicht direkt auf den Bereich der Platten 160 und 162 unter dem Reflektorelement 164 einfallen und wird vielmehr durch die Außenseite des Schenkels 166 zu der Dachwand 5 reflektiert. In dem Bereich unter dem Reflektorelement 164 kann teilweise Licht von der auf der gegenüberliegenden Seite liegenden Lampe 9 einfallen und ansonsten Licht eintreten, das vorangehend an der Dachwand 5 und gegebenenfalls an den Prismenplatten 160 und 162 reflektiert worden ist. Wenn das Licht in dem Bereich unter dem Element 164 eingetreten ist, wird es durch die reflektierenden Innenseiten der beiden Schenkel 166 und 168 sowie gegebenenfalls durch Reflexion an der Prismenplatte 162 gelenkt. Der Bereich unter dem Reflektorelement 164 bildet also gewissermaßen einen zweiten Hohllichtleiter in dem großen Hohllichtleiter, der durch die Dachwand 5 und die Platten 160 und 162 gebildet wird, wobei nur ein Teil des insgesamt von den Lampen 9 eingestrahlten Lichts in diesen zweiten Hohllichtleiter eingekoppelt wird. Insgesamt führt das Reflektorelement 164 zu einer Abschattung in dem Bereich B, so daß der Bereich der Lichtaustrittsfläche unterhalb diesem Reflektorelement dunkler erscheint. Gegebenenfalls kann die Innenseite des Reflektorelements 164 mit einer farbgebenden Beschichtung versehen sein, beispielsweise farbig lackiert oder mit einer fluoreszierenden Substanz versehen sein, so daß der Bereich unterhalb des Reflektorelements 164 sich farblich von dem Rest der Lichtaustrittsfläche abhebt.

Die vorangehend beschriebenen Ausführungsbeispiele können in vielfältiger Weise abgewandelt, modifiziert oder kombiniert werden. Grundsätzlich kann vorgesehen sein, daß in verschiedenen Bereichen des Hohllichtleiters oder der Leuchte unterschiedliche Strukturen zur Lichtauskopplung, unterschiedliche Dachreflektoren und/oder unterschiedliche Einrichtungen zum Erzeugen einer verringerten Leuchtdichte oder einer Farbe vorgesehen sind. Ebenso können die vorangehend erläuterten Geometrien der Prismenplatten bei unterschiedlichen Ausführungsformen eingesetzt werden. Zum Beispiel kann eine Prismenplatte, über welche weißes Licht mit einer abgeschirmten Lichtstärkeverteilung ausgekoppelt wird, im Inneren einer ringsum laufenden zweiten Prismenplatte angeordnet sein, ähnlich wie dies bei dem Ausführungsbeispiel der Fig. 8a dargestellt ist, wobei über die zweite, äußere Prismenplatte farbiges Licht, gegebenenfalls mit einer nicht abgeschirmten und/oder breitstrahlenden Lichtstärkeverteilung abgegeben wird.

Die vorangehend angegebenen Eigenschaften der Lichtstärkeverteilungskurve in den verschiedenen Bereichen (abgeschirmt, breitstrahlend, usw.) sind, ebenso wie die hierzu angegebenen Prismenwinkel der jeweiligen zugehörigen Prismenstrukturen, rein beispielhaft. Grundsätzlich können in den verschiedenen Bereichen der Lichtauskoppeleinrichtung, je nach der lichttechnischen Aufgabe, beliebige Lichtstärkeverteilungen des direkten Lichtanteils gegeben sein, die sich durch Auskopplung aus einem Hohllichtleiter mit einer lichtbrechenden Struktur realisieren lassen. Ebenso können die Prismenwinkel in den verschiedenen Bereichen entsprechend der jeweiligen lichttechnischen Aufgabe variiert werden.

Statt der dargestellten stab- oder ringförmigen Lampen können auch andere Lichtquellen, z.B. Kompaktleuchtstofflampen, Leuchtdioden etc., eingesetzt werden.

Die in der vorangehenden Beschreibung, den Ansprüchen und den Zeichnungen offenbarten Merkmale der Erfindung können sowohl einzeln als auch in beliebiger Kombination für die Verwirklichung der Erfindung in ihren verschiedenen Ausführungsformen wesentlich sein.

**Patentansprüche**

1. Leuchte, welche mehrere unterschiedlich ausgebildete Bereiche (A, B) aufweist, in denen sie unterschiedliche Lichtabstrahleigenschaften besitzt, und welche mindestens einen Hohllichtleiter (3) mit einem Hohlraum (8), eine oder mehrere Lampen (9; 118, 120; 130), welche Licht in den Hohlraum des Hohllichtleiters einstrahlen, und mindestens eine Lichtauskoppeleinrichtung (7) mit einer lichtbrechenden Struktur (30, 36) zum Auskoppeln von Licht aus dem Hohlraum des Hohllichtleiters zu einer Lichtaustrittsfläche (29) aufweist, wobei die Lichtauskoppeleinrichtung (7) bzw. die Lichtauskoppeleinrichtungen Wände des Hohllichtleiters (3) oder einen Teil davon bilden, wobei Licht mindestens einer Lampe (9; 118, 120; 130), welche Licht in den Hohllichtleiter einstrahlt, in unterschiedlichen Bereichen der Leuchte ausgekoppelt oder abgestrahlt wird, welche unterschiedliche Lichtabstrahleigenschaften besitzen, **dadurch gekennzeichnet, daß** eine stabförmige Lampe (9; 118, 120; 130) oder Kompaktleuchtstofflampe zumindest bereichsweise Licht in den Hohlraum (8) über eine Seite zwischen einer reflektierenden Wand (90, 94 ; 110, 112; 132, 136), welche einer Lichtauskoppeleinrichtung (7) gegenüber steht, und der Lichtauskoppeleinrichtung (7) einkoppelt und der Abstand der reflektierenden Wand (90, 94 ; 110, 112 ; 132, 136) von der Fläche, in der die Lichtauskoppeleinrichtung (7) liegt, an ihrem der Lampe (9; 118, 120; 130) zugewandtem Ende in einem ersten Bereich der Leuchte größer ist als in einem zweiten, in Richtung der Lampenachse versetzten Bereich der Leuchte.

2. Leuchte, welche mehrere unterschiedlich ausgebildete Bereiche (A, B) aufweist, in denen sie unterschiedliche Lichtabstrahleigenschaften besitzt, und welche mindestens einen Hohllichtleiter (3) mit einem Hohlraum (8), eine Ringlampe (9), welche Licht in den Hohlraum des Hohllichtleiters einstrahlt, und mindestens eine Lichtauskoppeleinrichtung (7) mit einer lichtbrechenden Struktur (30, 36) zum Auskoppeln von Licht aus dem Hohlraum des Hohllichtleiters zu einer Lichtaustrittsfläche (29) aufweist, wobei die Lichtauskoppeleinrichtung (7) bzw. die Lichtauskoppeleinrichtungen Wände des Hohllichtleiters (3) oder einen Teil davon bilden, wobei Licht der Lampe (9), welche Licht in den Hohllichtleiter einstrahlt, in unterschiedlichen Bereichen der Leuchte ausgekoppelt oder abgestrahlt wird, welche unterschiedliche Lichtabstrahleigenschaften besitzen, **dadurch gekennzeichnet, daß** die Ringlampe (9) zumindest bereichsweise Licht in den Hohlraum (8) über eine Seite zwischen einer reflektierenden Wand (90, 94 ; 110, 112; 132, 136), welche einer Lichtauskoppeleinrichtung (7) gegenüber steht, und der Lichtauskoppeleinrichtung (7) einkoppelt und der Abstand der reflektierenden Wand (90, 94 ; 110, 112; 132, 136) von der Fläche, in der die Lichtauskoppeleinrichtung (7) liegt, an ihrem der Lampe (9) zugewandtem Ende, in einem ersten Bereich der Leuchte größer ist als in einem zweiten, entlang der Lampe versetzten Bereich der Leuchte.

3. Leuchte nach Anspruch 1 oder 2, **dadurch gekennzeichnet, daß** das über eine Lichtaustrittsfläche der Leuchte in einem ersten Bereich abgestrahlte Licht eine symmetrische Lichtstärkeverteilungskurve aufweist und in einem zweiten Bereich eine asymmetrische Lichtstärkeverteilungskurve.

4. Leuchte nach einem der Ansprüche 1 bis 3, **dadurch gekennzeichnet, daß** eine Lichtauskoppeleinrichtung (7) mehrere Bereiche mit verschiedenen lichtbrechenden Strukturen zur Lichtauskopplung aufweist.

5. Leuchte nach Anspruch 1 und 24, **dadurch gekennzeichnet, daß** die Lichtauskoppeleinrichtung (7) zwei in Richtung der Lampenachse versetzte Bereiche (A, B) mit einer unterschiedlichen lichtbrechenden Struktur aufweist.

6. Leuchte nach Anspruch 4 oder 5, **dadurch gekennzeichnet, daß** ein erster Bereich mit einer ersten lichtbrechenden Struktur einen zweiten Bereich mit einer zweiten lichtbrechenden Struktur auf mehreren Seiten umgibt.

7. Leuchte nach einem der Ansprüche 4 bis 6, **dadurch gekennzeichnet, daß** in einem ersten Bereich eine Struktur mit Prismen oder prismenähnlichen Elementen (30, 36) mit einem Prismenwinkel von mehr als 90° und in einem zweiten Bereich eine Struktur mit Prismen oder prismenähnlichen Elementen mit einem Prismenwinkel von 55° bis 80° vorgesehen sind.

8. Leuchte nach Anspruch 1 oder einem der Ansprüche 3 bis 7, soweit auf Anspruch 1 rückbezogen, **dadurch gekennzeichnet, daß** die Leuchte eine stabförmige Lampe (118, 120; 130) oder eine Kompaktleuchtstofflampe aufweist und eine einer Lichtauskoppeleinrichtung gegenüberstehende reflektierende Wand (80, 82; 90, 94; 110, 112; 132, 136) in verschiedenen in Richtung der Lampenachse versetzten Bereichen unterschiedlich ausgebildet ist.

9. Leuchte nach Anspruch 1 oder einem der Ansprüche 3 bis 8, soweit auf Anspruch 1 rückbezogen, **dadurch gekennzeichnet, daß** die Leuchte eine stabförmige Lampe (118, 120; 130) oder eine Kompaktleuchtstofflampe aufweist und eine einer Lichtauskoppeleinrichtung gegenüberstehende reflektierende Wand zwei in Richtung der Lampenachse versetzte Bereiche (80, 82) aufweist, in denen die Wand, bezogen auf eine Ebene senkrecht zu der Lampenachse, unterschiedlich gekrümmt oder zu der Lichtauskoppeleinrichtung geneigt ist.

10. Leuchte nach einem der Ansprüche 1 bis 9, **dadurch gekennzeichnet, daß** eine einer Lichtauskoppeleinrichtung gegenüberstehende reflektierende Wand (90, 94) in einem ersten Bereich so zu einer Lampe (9; 118, 120) ausgerichtet ist, daß das von der Lampe (9; 118, 120) auf sie einfallende Licht im wesentlichen auf ihre dem Hohlraum zugewandte Seite einfällt und in den Hohlraum reflektiert wird, und in einem zweiten Bereich das auf sie einfallende Licht derselben Lampe (9; 118, 120) zumindest teilweise auf die von dem Hohlraum abgewandte Seite einfällt und von dem Hohlraum weg zur Abgabe eines indirekten Lichtanteils reflektiert wird.

11. Leuchte nach einem der Ansprüche 8 bis 10, **dadurch gekennzeichnet, daß** eine Lampe (130) nur in einem Teil der besagten versetzten Bereiche Licht auf die besagte reflektierende Wand (110) einstrahlt.

12. Leuchte nach einem der Ansprüche 1 bis 11, **dadurch gekennzeichnet, daß** eine Lichtaustrittsfläche einen ersten Bereich mit einer ersten mittleren Leuchtdichte und einem zweiten, an den ersten Bereich angrenzenden Bereich mit einer zweiten mittleren Leuchtdichte aufweist, die geringer als die erste Leuchtdichte ist.

13. Leuchte nach Anspruch 12, **dadurch gekennzeichnet, daß** in dem Hohlraum und/oder an oder in einer Lichtauskoppeleinrichtung eine Einrichtung zum Reduzieren der Lichtstärke (148; 164) des über die Lichtauskoppeleinrichtung ausgekoppelten Lichts in einem Teilbereich der Lichtauskoppeleinrichtung vorgesehen ist.

**14.** Leuchte nach Anspruch 12 oder 13, **dadurch gekennzeichnet, daß** in der Lichtauskoppeleinrichtung in einem Teilbereich ein die Lichtstärke reduzierendes Element (148) einem Element mit einer lichtbrechenden Struktur (144, 146) vor- oder nachgeschaltet ist.

**15.** Leuchte nach Anspruch 13 oder 14, **dadurch gekennzeichnet, daß** von der Lichtauskoppeleinrichtung beabstandet im Inneren des Hohlraums ein teilweise lichtdurchlässiges Element angeordnet ist, welches die Lichtstärke des auf einen Teilbereich der Lichauskoppeleinrichtung einfallenden Lichts reduziert.

**16.** Leuchte nach einem der Ansprüche 13 bis 15, **dadurch gekennzeichnet, daß** von der Lichtauskoppeleinrichtung beabstandet im Inneren des Hohlraums des Hohllichtleiters ein Element (164) angeordnet ist, welches zwischen der Lichtauskoppeleinrichtung (160, 162) und einer der Lichtauskoppeleinrichtung gegenüberliegenden Wand (5) angeordnet ist und sich über einen Teilbereich des Hohlraums erstreckt, und auf der der Lichtauskoppeleinrichtung (160, 162) zugewandten Seite und auf der dieser Seite gegenüberliegenden Seite reflektierend ausgebildet ist.

**17.** Leuchte nach einem der Ansprüche 13 bis 16, **dadurch gekennzeichnet, daß** die Lichtstärkeverteilungskurve in dem Bereich mit verringerter Leuchtdichte einen größeren Winkelbereich abdeckt als in dem Bereich mit größerer Leuchtdichte.

**18.** Leuchte nach einem der Ansprüche 1 bis 17, **dadurch gekennzeichnet, daß** eine Lichtaustrittsfläche einen ersten Bereich und einen zweiten, an den ersten Bereich angrenzenden Bereich aufweist, in dem das austretende Licht eine andere Farbe als in dem ersten Bereich aufweist.

**19.** Leuchte nach Anspruch 18, **dadurch gekennzeichnet, daß** in dem Hohlraum und/oder an oder in der Lichtauskoppeleinrichtung eine farbgebende Einrichtung (148; 164) zum Erzeugen einer bestimmten Farbe des aus der Lichtauskoppeleinrichtung austretenden Lichts in einem Teilbereich der Lichtauskoppeleinrichtung vorgesehen ist.

**20.** Leuchte nach Anspruch 19, **dadurch gekennzeichnet, daß** die Lichtauskoppeleinrichtung (144, 146) eine flächiges lichtdurchlässiges Element (148) aufweist, das ganz oder teilweise farbgebend ausgebildet ist, derart, daß der farbgebende Bereich dieses Elements einen Teilbereich der Lichtauskoppeleinrichtung (144, 146) bildet.

**21.** Leuchte nach Anspruch 19 oder 20, **dadurch gekennzeichnet, daß** von der Lichtauskoppeleinrichtung (160, 162) beabstandet im Inneren des Hohlraums ein farbgebendes Element (164) angeordnet ist, welches die Farbe des auf einen Teilbereich der Lichauskoppeleinrichtung einfallenden Lichts verändert.

**22.** Leuchte nach einem der Ansprüche 19 bis 21, **dadurch gekennzeichnet, daß** von der Lichtauskoppeleinrichtung beabstandet im Inneren des Hohlraums ein beidseitig reflektierendes Element (164) angeordnet ist, welches zwischen der Lichtauskoppeleinrichtung (160, 162) und einer der Lichtauskoppeleinrichtung gegenüberliegenden Wand (5) angeordnet ist und sich über einen Teilbereich des Hohlraums erstreckt, wobei die der Lichtauskoppeleinrichtung zugewandte Seite dieses Elements farbgebend ausgebildet ist.

**23.** Leuchte nach einem der Ansprüche 18 bis 22, **dadurch gekennzeichnet, daß** der Lichtauskoppeleinrichtung oder einem Element der Lichtkoppeleinrichtung eine farbselektive Einrichtung nachgeschaltet ist, welche die Farbe des austretenden Lichts auf einem Teil der Lichtaustrittsfläche verändert.

**24.** Leuchte nach einem der Ansprüche 18 bis 23, **dadurch gekennzeichnet, daß** die Leuchtdichte in einem Bereich der Lichtaustrittsfläche in einem Bereich, in dem farbiges Licht austritt, geringer ist als in einem Bereich, in dem weißes Licht austritt.

**25.** Leuchte nach einem der Ansprüche 1 bis 24, **dadurch gekennzeichnet, daß** die Lichtauskoppeleinrichtung (20, 140, 142, 144, 146) einen Teilbereich ohne eine das hindurchtretende Licht gerichtet ablenkende lichtbrechende Struktur aufweist.

**26.** Leuchte nach Anspruch 25, **dadurch gekennzeichnet, daß** die Lichtauskoppeleinrichtung in einem Teilbereich, in dem ein die Leuchtdichte begrenzendes und/oder ein farbgebendes Element wirksam ist, keine das hindurchtretende Licht gerichtet ablenkende lichtbrechende Struktur aufweist.

**27.** Leuchte nach Anspruch 1 oder einem des Ansprüche 3 bis 26, so weit auf Anspruch 1 rückbezogen, **dadurch gekennzeichnet, daß** die Leuchte eine stabförmige Lampe (130) oder eine Kompaktleuchtstofflampe aufweist und die Leuchte mehrere in der Richtung der Achse der Lampe (130) versetzte Bereiche mit unterschiedlichen Lichtabstrahleigenschaften aufweist und sich eine Lampe (130) nur über einen Teil dieser Bereiche erstreckt.

**Claims**

1. Luminaire which exhibits a number of differently formed regions (A, B) in which it has different light radiation properties, and which exhibits at least one hollow light guide (3) with a cavity (8), one or more lamps (9; 118, 120; 130) which radiate light into the cavity of the hollow light guide, and at least one light decoupling device (7) with a light refracting structure (30, 36) for decoupling light from the cavity of the hollow light guide to a light exit surface (29), the light decoupling device (7) or the light decoupling devices forming walls of the hollow light guide (3) or a part thereof, light of at least one lamp (9; 118, 120; 130), which radiates light into the hollow light guide, being decoupled or radiated in different regions of the luminaire which have different light radiation properties, **characterized in that** a linear lamp (9; 118, 120; 130) or compact fluorescent lamp at least partially couples light into the cavity (8) via a side between a reflecting wall (90, 94; 110, 112; 132, 136), which is opposite a light decoupling device (7), and the light decoupling device (7), and the distance of the reflecting wall (90, 94; 110, 112; 132, 136) from the surface in which the light decoupling device (7) lies is, at its end facing the lamp (9; 118, 120; 130), larger in a first region of the luminaire than in a second region of the luminaire offset in the direction of the lamp axis.

2. Luminaire which exhibits a number of differently formed regions (A, B) in which it has different light radiation properties, and which exhibits at least one hollow light guide (3) with a cavity (8), an annular lamp (9) which radiates light into the cavity of the hollow light guide, and at least one light decoupling device (7) with a light refracting structure (30, 36) for decoupling light from the cavity of the hollow light guide to a light exit surface (29), the light decoupling device (7) or the light decoupling devices forming walls of the hollow light guide (3) or a part thereof, light of the lamp (9), which radiates light into the hollow light guide, being decoupled or radiated into different regions of the luminaire which have different light radiation properties, **characterized in that** the annular lamp (9) at least partially couples light into the cavity (8) via a side between a reflecting wall (90, 94; 110, 112; 132, 136), which is opposite a light decoupling device (7), and the light decoupling device (7), and the distance of the reflecting wall (90, 94; 110, 112; 132, 136) from the surface in which the light decoupling device (7) lies is, at its end facing the lamp (9), larger in a first region of the luminaire than in a second region of the luminaire offset along the lamp.

3. Luminaire according to Claim 1 or 2, **characterized in that** the light radiated via a light exit surface of the luminaire has a symmetrical light intensity distribution curve in a first region, and an asymmetric light intensity distribution curve in a second region.

4. Luminaire according to one of Claims 1 to 3, **characterized in that** a light decoupling device (7) has a number of regions with various light refracting structures for light decoupling.

5. Luminaire according to Claims 1 and 4, **characterized in that** the light decoupling device (7) has two regions (A, B), offset in the direction of the lamp axis, with a different light refracting structure.

6. Luminaire according to Claim 4 or 5, **characterized in that** a first region with a first light refractive structure surrounds a second region with a second light refractive structure on a number of sides.

7. Luminaire according to one of Claims 4 to 6, **characterized in that** provided in a first region is a structure with prisms or prism-like elements (30, 36) with a prism angle of more than 90°, and in a second region a structure with prisms or prism-like elements with a prism angle of 55° to 80°.

8. Luminaire according to Claim 1 or one of Claims 3 to 7, when referred back to Claim 1, **characterized in that** the luminaire exhibits a linear lamp (118, 120; 130) or a compact fluorescent lamp, and a reflecting wall (80, 82; 90, 94; 110, 112; 132, 136) opposite a light decoupling device is differently formed in various regions offset in the direction of the lamp axis.

9. Luminaire according to Claim 1 or one of Claims 3 to 8, when referred back to Claim 1, **characterized in that** the luminaire exhibits a linear lamp (118, 120; 130) or a compact fluorescent lamp, and a reflecting wall opposite a light decoupling device has two regions (80, 82), offset in the direction of the lamp axis, in which, with reference to a plane perpendicular to the lamp axis, the wall is differently curved or inclined in relation to the light decoupling device.

**10.** Luminaire according to one of Claims 1 to 9, **characterized in that** a reflecting wall (90, 94) opposite a light decoupling device is aligned in a first region with a lamp (9; 118, 120) such that the light incident on it from the lamp (9; 118, 120) is substantially incident on its side facing the cavity and is reflected into the cavity, and in a second region the light of the same lamp (9; 118, 120) incident on it is at least partially incident on the side averted from the cavity, and is reflected away from the cavity so as to output an indirect light component.

**11.** Luminaire according to one of Claims 8 to 10, **characterized in that** a lamp (130) radiates light onto said reflecting wall (110) only in a portion of said offset regions.

**12.** Luminaire according to one of Claims 1 to 11, **characterized in that** a light exit surface has a first region with a first mean luminance, and a second region, bordering the first region, with a second mean luminance, which is less than the first luminance.

**13.** Luminaire according to Claim 12, **characterized in that** provided in the cavity and/or on or in a light decoupling device is a device for reducing the light intensity (148; 164) of the light, decoupled via the light decoupling device, in a subregion of the light decoupling device.

**14.** Luminaire according to Claim 12 or 13, **characterized in that** in a subregion of the light decoupling device an element (148) reducing the light intensity is placed upstream or downstream of an element with a light-refracting structure (144, 146).

**15.** Luminaire according to Claim 13 or 14, **characterized in that** arranged at a spacing from the light decoupling device in the interior of the cavity is a partially transparent element which reduces the light intensity of the light incident on a subregion of the light decoupling device.

**16.** Luminaire according to one of Claims 13 to 15, **characterized in that** arranged at a spacing from the light decoupling device in the interior of the cavity of the hollow light guide is an element (164) which is arranged between the light decoupling device (160, 162) and a wall (5) opposite the light decoupling device, and extends over a subregion of the cavity, and is designed in a reflecting fashion on the side facing the light decoupling device (160, 162) and on the side opposite this side.

**17.** Luminaire according to one of Claims 13 to 16, **characterized in that** the light intensity distribution curve in the region of reduced luminance covers a larger angular range than in the region of larger luminance.

**18.** Luminaire according to one of Claims 1 to 17, **characterized in that** a light exit surface has a first region and a second region, bordering on the first region, in which the emerging light exhibits a different colour than in the first region.

**19.** Luminaire according to Claim 18, **characterized in that** provided in the cavity and/or on or in the light decoupling device is a colouring device (148; 164) for producing a specific colour of the light, emerging from the light decoupling device, in a subregion of the light decoupling device.

**20.** Luminaire according to Claim 19, **characterized in that** the light decoupling device (144, 146) has a plane transparent element (148) which is designed in a wholly or partially colouring fashion in such a way that the colouring region of this element forms a subregion of the light decoupling device (144, 146).

**21.** Luminaire according to Claim 19 or 20, **characterized in that** arranged at a spacing from the light decoupling device (160, 162) in the interior of the cavity is a colouring element (164) which varies the colour of the light incident on a subregion of the light decoupling device.

**22.** Luminaire according to one of Claims 19 to 21, **characterized in that** arranged at a spacing from the light decoupling device in the interior of the cavity is an element (164) which reflects on both sides, is arranged between the light decoupling device (160, 162) and a wall (5) opposite the light decoupling device, and extends over a subregion of the cavity, the side, facing the light decoupling device, of this element being designed in a colouring fashion.

**23.** Luminaire according to one of Claims 18 to 22, **characterized in that** placed downstream of the light decoupling device or an element of the light decoupling device is a colour-selective device which varies the colour of the exiting light on a part of the light exit surface.

24. Luminaire according to one of Claims 18 to 23, **characterized in that** the luminance in a region of the light exit surface in the region in which coloured light exits is less than in the region in which white light exits.

25. Luminaire according to one of Claims 1 to 24, **characterized in that** the light decoupling device (20, 140, 142, 144, 146) has a subregion without a light refracting structure which deflects the light passing through in a directed fashion.

26. Luminaire according to Claim 25, **characterized in that** in a subregion in which an element is active which limits the luminance and/or is colouring, the light decoupling device has no light-refracting structure which deflects the light passing through in a directed fashion.

27. Luminaire according to Claim 1 or one of Claims 3 to 26, when referred back to Claim 1, **characterized in that** the luminaire exhibits a linear lamp (130) or a compact fluorescent lamp, and the luminaire exhibits a number of regions, offset in the direction of the axis of the lamp (130), with different light radiation properties, and a lamp (130) extends only over a portion of these regions.

**Revendications**

1. Luminaire présentant plusieurs zones (A, B) configurées différemment, dans lesquelles il présente différentes caractéristiques de rayonnement de lumière et qui présente au moins un guide d'ondes lumineuses (3) avec un espace vide (8), une ou plusieurs lampes (9 ; 118, 120 ; 130), qui émettent de la lumière dans l'espace vide du guide d'ondes lumineuses et au moins un dispositif de découplage de la lumière (7) avec une structure réfractaire (30, 36) servant au découplage de la lumière à partir de l'espace vide du guide d'ondes lumineuses vers une surface de sortie de la lumière (29), le dispositif de découplage de la lumière (7) ou les dispositifs de découplage de la lumière formant des parois du guide d'ondes lumineuses (3) ou une partie de celles-ci, la lumière d'au moins une lampe (9 ; 118, 120 ; 130) qui rayonne dans le guide d'ondes lumineuses, étant découplée ou émise dans différentes zones du luminaire, lequel possède différentes caractéristiques de rayonnement de la lumière, **caractérisé en ce qu'**une lampe en forme de barre (9 ; 118, 120 ; 130) ou lampe fluorescente compacte injecte de la lumière au moins par zone dans l'espace vide (8) sur un côté entre une paroi réfléchissante (90, 94 ; 110, 112 ; 132, 136), placée en face d'un dispositif de découplage de la lumière, (7) et le dispositif de découplage de la lumière (7) et l'écart de la paroi réfléchissante (90, 94 ; 110, 112 ; 132, 136) depuis la surface dans laquelle se trouve le dispositif de découplage de la lumière (7), à son extrémité orientée vers la lampe (9 ; 118, 120 ; 130), est plus grand dans une première zone du luminaire que dans une deuxième zone du luminaire décalée dans la direction de l'axe de la lampe.

2. Luminaire présentant plusieurs zones (A, B) configurées différemment, dans lesquelles il présente différentes caractéristiques de rayonnement de lumière et qui présente au moins un guide d'ondes lumineuses (3) avec un espace vide (8), une lampe circulaire (9), qui émet de la lumière dans l'espace vide du guide d'ondes lumineuses et au moins un dispositif de découplage de la lumière (7) avec une structure réfractaire (30, 36) servant au découplage de la lumière à partir de l'espace vide du guide d'ondes lumineuses vers une surface de sortie de la lumière (29), le dispositif de découplage de la lumière (7) ou les dispositifs de découplage de la lumière formant des parois du guide d'ondes lumineuses (3) ou une partie de celles-ci, la lumière de la lampe (9) qui rayonne dans le guide d'ondes lumineuses, étant découplée ou émise dans différentes zones du luminaire, lequel possède différentes caractéristiques de rayonnement de la lumière, **caractérisé en ce que** la lampe circulaire (9) injecte de la lumière au moins par zone dans l'espace vide (8) sur un côté entre une paroi réfléchissante (90, 94 ; 110, 112 ; 132, 136), placée en face d'un dispositif de découplage de la lumière (7), et le dispositif de découplage de la lumière (7) et l'écart de la paroi réfléchissante (90, 94 ; 110, 112 ; 132, 136) depuis la surface dans laquelle se trouve le dispositif de découplage de la lumière (7), à son extrémité orientée vers la lampe (9), est plus grand dans une première zone du luminaire que dans une deuxième zone du luminaire décalée le long de la lampe.

3. Luminaire selon les revendications 1 ou 2, **caractérisé en ce que** la lumière rayonnant dans une première zone sur une surface de sortie de lumière du luminaire présente une courbe de répartition d'intensité lumineuse symétrique et dans une deuxième zone une courbe de répartition d'intensité lumineuse asymétrique.

4. Luminaire selon l'une quelconque des revendications 1 à 3, **caractérisé en ce qu'**un dispositif de découplage de la lumière (7) présente plusieurs zones avec différentes structures réfractaires servant au découplage de la lumière.

5. Luminaire selon les revendications 1 et 4, **caractérisé en ce que** le dispositif de découplage de la lumière (7) présente deux zones décalées (A, B) dans le sens de l'axe de la lampe avec une structure réfractaire différente.

**6.** Luminaire selon les revendications 4 ou 5, **caractérisé en ce qu'**une première zone avec une première structure réfractaire entoure sur plusieurs côtés une deuxième zone avec une deuxième structure réfractaire.

**7.** Luminaire selon l'une quelconque des revendications 4 à 6, **caractérisé en ce que** dans une première zone une structure est prévue avec des prismes ou des éléments semblables à des prismes (30, 36) avec un angle de prisme supérieur à 90° et dans une deuxième zone avec des prismes ou des éléments semblables à des prismes avec un angle de prisme de 55° à 80°.

**8.** Luminaire selon la revendication 1 ou l'une quelconque des revendications 3 à 7 en combinaison avec la revendication 1, **caractérisé en ce que** le luminaire présente une lampe en forme de barre (118, 120 ; 130) ou une lampe fluorescente compacte et une paroi réfléchissante (80, 82 ; 90, 94 ; 110, 112 ; 132, 136) placée en face d'un dispositif de découplage de la lumière est configurée dans différentes zones décalées dans le sens de l'axe de la lampe.

**9.** Luminaire selon la revendication 1 ou l'une quelconque des revendications 3 à 8, dans la mesure où elle se rapporte à la revendication 1, **caractérisé en ce que** le luminaire présente une lampe en forme de barre (118, 120 ; 130) ou une lampe torche compacte et une paroi réfléchissante placée en face d'un dispositif de découplage de la lumière présente deux zones (80, 82) décalées dans le sens de l'axe de la lampe, dans lesquelles la paroi, en fonction d'un plan perpendiculaire à l'axe de la lampe, est courbée différemment ou inclinée vers le dispositif de découplage de la lumière.

**10.** Luminaire selon l'une quelconque des revendications 1 à 9, **caractérisé en ce qu'**une paroi réfléchissante (90, 94) placée en face d'un dispositif de découplage de la lumière est alignée dans une première zone par rapport à une lampe (9 ; 118, 120) de telle manière que la lumière tombant sur elle depuis la lampe (9 ; 118, 120) tombe essentiellement sur son côté orienté vers l'espace vide et est réfléchie dans l'espace vide et dans une deuxième zone, la lumière tombant sur elle de la même lampe (9 ; 118, 120) tombe au moins partiellement sur le côté opposé de l'espace vide et est réfléchie par l'espace vide servant à la distribution d'un pourcentage indirect de lumière.

**11.** Luminaire selon l'une quelconque des revendications 8 à 10, **caractérisé en ce qu'**une lampe (130) n'émet de la lumière sur ladite paroi réfléchissante (110) que dans une partie de ladite zone décalée.

**12.** Luminaire selon l'une quelconque des revendications 1 à 11, **caractérisé en ce qu'**une surface de sortie de lumière présente une première zone avec une première densité lumineuse moyenne et une deuxième zone adjacente à la première zone avec une deuxième intensité lumineuse moyenne, qui est moins importante que la première intensité lumineuse.

**13.** Luminaire selon la revendication 12, **caractérisé en ce que** dans l'espace vide et/ou sur ou dans un dispositif de découplage de la lumière, un dispositif est prévu servant à réduire l'intensité de lumière (148 ; 164) de la lumière découplée au moyen du dispositif de découplage de la lumière dans une zone partielle du dispositif de découplage de la lumière.

**14.** Luminaire selon les revendications 12 ou 13 **caractérisé en ce que** dans le dispositif de découplage de la lumière dans une zone partielle un élément de réduction de l'intensité lumineuse (148) est couplé en amont ou en aval d'un élément avec une structure réfractaire (144, 146).

**15.** Luminaire selon les revendications 13 ou 14, **caractérisé en ce qu'**un élément partiellement transparent est disposé à l'intérieur de l'espace vide à l'écart du dispositif de découplage de la lumière, ledit élément réduisant l'intensité de la lumière tombant sur une zone partielle du dispositif de découplage de la lumière.

**16.** Luminaire selon l'une quelconque des revendications 13 à 15, **caractérisé en ce qu'**un élément (164) est disposé à l'intérieur de l'espace vide du guide d'ondes lumineuses à l'écart du dispositif de découplage de la lumière ; cet élément est disposé entre le dispositif de découplage de la lumière (160, 162) et une paroi (5) placée en face du dispositif de découplage de la lumière et s'étend sur une zone partielle de l'espace vide et est configuré de manière à se réfléchir sur le côté orienté vers le dispositif de découplage de la lumière (160, 162) et sur le côté opposé de ce côté.

**17.** Luminaire selon l'une quelconque des revendications 13 à 16, **caractérisé en ce que** la courbe de répartition de l'intensité de lumière couvre dans la zone dont l'intensité lumineuse est réduite une zone angulaire plus grande que dans la zone dont l'intensité lumineuse est plus importante.

**18.** Luminaire selon l'une quelconque des revendications 1 à 17, **caractérisé en ce qu'**une surface de sortie de lumière présente une première zone et une deuxième zone adjacente à la première zone, dans laquelle la lumière sortant présente une autre couleur que dans la première zone.

**19.** Luminaire selon la revendication 18, **caractérisé en ce que** dans l'espace vide et/ou sur ou dans le dispositif de découplage de la lumière, un dispositif de coloration est prévu (148, 164) servant à produire une couleur déterminée de la lumière sortant du dispositif de découplage de la lumière dans une zone partielle du dispositif de découplage de la lumière.

**20.** Luminaire selon la revendication 19, **caractérisé en ce que** le dispositif de découplage de la lumière (144, 146) présente un élément transparent plat (148) qui est configuré entièrement ou partiellement avec coloration, de manière à ce que la zone de coloration de cet élément forme une zone partielle du dispositif de découplage de la lumière (144, 146).

**21.** Luminaire selon les revendications 19 ou 20, **caractérisé en ce qu'**un élément de coloration (164) est disposé à l'intérieur de l'espace vide à l'écart du dispositif de découplage de la lumière (160, 162), lequel élément modifie la couleur de la lumière tombant sur une zone partielle du dispositif de découplage de la lumière.

**22.** Luminaire selon l'une quelconque des revendications 19 à 21, **caractérisé en ce qu'**un élément se réfléchissant bilatéralement (164) est disposé à l'intérieur de l'espace vide à l'écart du dispositif de découplage de la lumière, cet élément est disposé entre le dispositif de découplage de la lumière (160, 162) et une paroi (5) placée en face du dispositif de découplage de la lumière et s'étend sur une zone partielle de l'espace vide, le côté orienté vers le dispositif de découplage de la lumière de cet élément étant configuré avec coloration.

**23.** Luminaire selon l'une quelconque des revendications 18 à 22, **caractérisé en ce qu'**un dispositif de sélection de couleurs est disposé en aval du dispositif de découplage de la lumière ou d'un élément du dispositif de découplage de la lumière, ce dispositif modifiant la couleur de la lumière sortant sur une partie de la surface de sortie de la lumière.

**24.** Luminaire selon l'une quelconque des revendications 18 à 23, **caractérisé en ce que** l'intensité lumineuse est plus petite dans une zone de la surface de sortie de la lumière, dans laquelle sort une lumière colorée, que dans une zone dans laquelle sort une lumière blanche.

**25.** Luminaire selon l'une quelconque des revendications 1 à 24, **caractérisé en ce que** le dispositif de découplage de la lumière (20, 140, 142, 144, 146) présente une zone partielle sans une structure réfractaire dirigée de manière à diffracter la lumière qui la traverse.

**26.** Luminaire selon la revendication 25, **caractérisé en ce que** le dispositif de découplage de la lumière dans une zone partielle, dans laquelle agit un élément de coloration et/ou de limitation de l'intensité lumineuse, ne présente aucune structure réfractaire dirigée de manière à diffracter la lumière qui le traverse.

**27.** Luminaire selon la revendication 1 ou l'une quelconque des revendications 3 à 26, en combinaison avec la revendication 1, **caractérisé en ce que** le luminaire présente une lampe en forme de barre (130) ou une lampe fluorescente compacte et le luminaire présente plusieurs zones décalées dans le sens de l'axe de la lampe (130) avec différentes caractéristiques de rayonnement de lumière et une lampe (130) ne s'étend que sur une partie de ces zones.

Fig. 1

Fig. 2

Fig. 3

EP 1 132 680 B1

**Fig. 4b**

9    5

9

11    11

7

IVb ——————————————— IVb

A

**50**

9    9

B

**52**

IVc ——————————————— IVc

**Fig. 4a**

9    5    9

11    11

7

**Fig. 4c**

21

Fig. 5b

9    5

11    9

9    11

7

Vb    Vb

B    56a    56b    B

Vc    54    Vc

9    9

A    Fig. 5a

9    5    9

11    11

7    Fig. 5c

**Fig. 6b**

5

11

9

64    7    66    62    60

A    B

Vlb ———————————————————— Vlb

9

**Fig. 6a**

**Fig. 7b**

9       5       9

11       11

7

VIIb —————————————————————— VIIb

72      70

**B**          **A**       **Fig. 7a**

**80**

**11**

**11**

**9**

**9**

**7**

## Fig. 8b

**9**

**9**

**9**

**VIIIb** — **VIIIb** **A**

**84**

**86**

**VIIIc** — **VIIIc** **B**

## Fig. 8a

**82b** **82** **82a**

**11** **11**

**9** **9**

**9**

**7**

## Fig. 8c

92   9      90      9   92

90a        90b

Fig. 9b

100

IXb                    IXb        A

IXc                    IXc        B

Fig. 9a

94   102

9    94a   94b    9

11                    11

7    96   98        Fig. 9c

26

Fig. 10b

Fig. 10a

Fig. 10c

**Fig. 11b**

**Fig. 11a**

**Fig. 11c**

**134** **132** **Fig. 12b**

**118**

**138**

XIIb ——————————— XIIb   A

XIIc ——————————— XIIc   B

**118**

**Fig. 12a**

**134** **136**

**118**

**96** **98** **Fig. 12c**

**Fig. 13b**

9　5　11

11　9

146

146

144　148　20　142　140　148　144

XIIIb ——————— XIIIb

B　A　B

**Fig. 13a**

9    9

11    148    148    11

20    140    142    **Fig. 14**

11    164    5    164

9    9

166    11

168

20    160    162

**Fig. 15**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0638764 B1
- EP 1033530 A2
- EP 0978683 A1
- US PS5863114 A
- US PS5396350 A
- US PS5555109 A